# EUROPEAN PATENT SPECIFICATION

(11) **EP 0 822 768 B1**
(45) Date of publication and mention of the grant of the patent: **31.10.2001**
(21) Application number: 96913063.2
(22) Date of filing: 19.04.1996
(51) Int. Cl.: A46B 1/00, A46B 13/00, A46D 1/00

(54) **ABRASIVE BRUSH AND FILAMENTS**
MIT SCHLEIFMITTEL VERSEHENE BÜRSTE ODER BÜRSTENBORSTEN
BROSSE ET FILAMENTS ABRASIFS

(30) Priority: 28.04.1995 US 431910; 16.11.1995 US 558718; 16.11.1995 US 559334
(43) Date of publication of application: 11.02.1998
(60) Divisional application: 01200484.2
(73) Proprietor: MINNESOTA MINING AND MANUFACTURING COMPANY, St. Paul, Minnesota 55133-3427 (US)
(72) Inventor: JOHNSON, David, E., Saint Paul, MN 55133-3427 (US); MANN, Lawrence, J., Saint Paul, MN 55133-3427 (US); MEVISSEN, Scott, M., Saint Paul, MN 55133-3427 (US); PIHL, Richard, M., Saint Paul, MN 55133-3427 (US); ROEKER, David, C., Saint Paul, MN 55133-3427 (US); BANGE, Donna, W., Saint Paul, MN 55133-3427 (US); LIEPA, Mara, E., Saint Paul, MN 55133-3427 (US); IONTA, Richard, Saint Paul, MN 55133-3427 (US)
(74) Representative: Hill, Cecilia Ann
(86) International application number: US9605640
(87) International publication number: WO9633638

(56) References cited:
- WO-A-93/18891
- GB-A- 743 022
- US-A- 3 233 272
- US-A- 3 618 154
- US-A- 5 174 795
- US-A- 5 233 719

## Description

### TECHNICAL FIELD

The present invention relates generally to an abrasive brush having a plurality of bristles unitary with a base, and more particularly to an abrasive brush made by injection molding a mixture of a moldable polymer and abrasive particles. The brush can include organic or inorganic abrasive particles. The present invention also relates to abrasive filaments comprising a thermoplastic matrix having plastic abrasive particles dispersed therein.

### BACKGROUND OF THE INVENTION

Brushes have been used for many years to polish, clean and abrade a wide variety of substrates. These brush products typically have a plurality of bristles that contact the substrate. Abrasive particles can be added to bristles to increase their abrasiveness. There are many manufacturing steps necessary to manufacture a conventional abrasive brush having bristles which contain abrasive particles. A mixture of abrasive particles and a thermoplastic binder may be combined and then extruded to form a bristle. The bristle is then cut to the desired length. A plurality of these bristles are then mechanically combined to form a brush segment. Next, a plurality of these brush segments may be installed on a hub or plate to form a brush.

One example of such a brush is disclosed in U.S. Patent No. 5,045,091, "Method of Making Rotary Brush With Removable Brush Elements," (Abrahamson et al.). In Abrahamson et al., a plurality of abrasive bristles are mechanically clamped together and a root system is installed to form a brush segment. A plurality of these brush segments are installed on a rotary hub. Another arrangement for mechanically mounting bristles on a hub to form a brush segment is disclosed in U.S. Patent No. 5,233,719, "Apparatus and Brush Segment Arrangement for Finishing Wheel Brushes," (Young et al.). Young et al. teach a brush segment comprising a substrate with a carpet of bristles mounted on one side of the substrate, by means of a polymeric resin for example, and a root system extending from the opposite side of the substrate for engagement with a rotary hub. U.S. Patent No. 5,400,458 (Rambosek) teaches a brush segment having a plurality of bristles embedded in a polymeric base portion. A root means for attaching the segment to a hub can be integrally molded with the base.

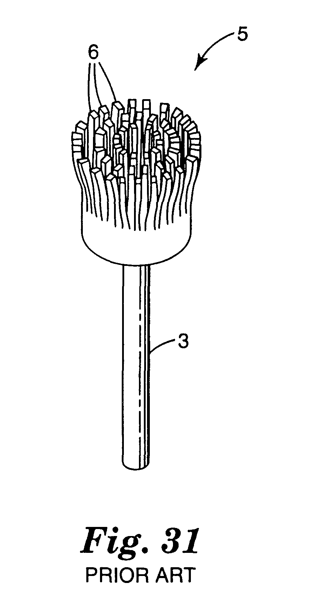

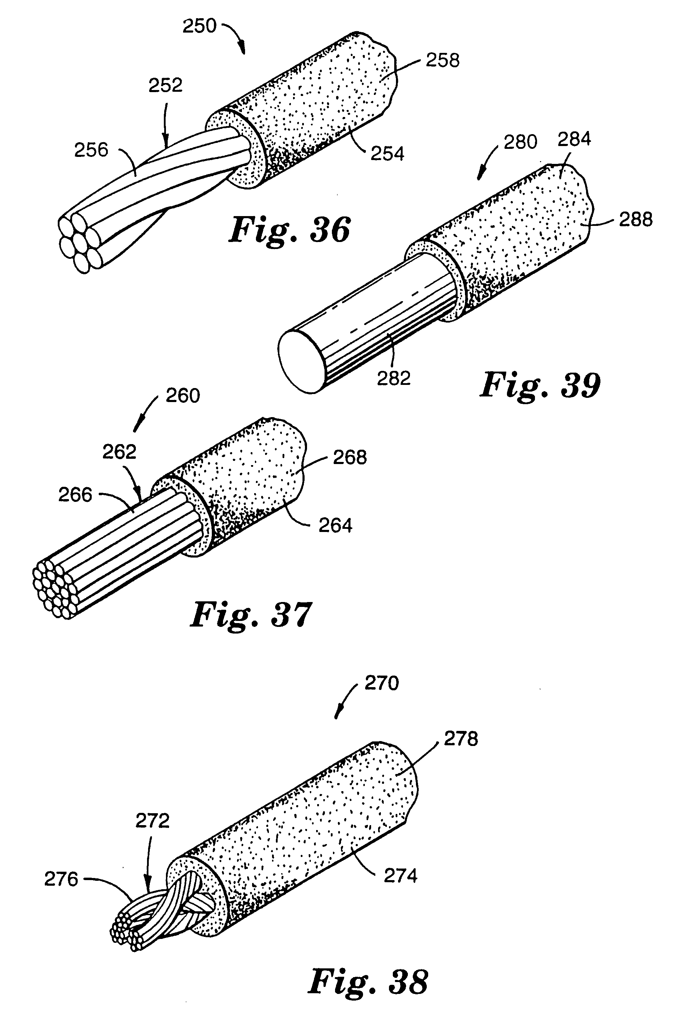

U.S. Patent No. 5,233,794, "Rotary Tool Made of Inorganic Fiber-Reinforced Plastic," (Kikutani et al.), discloses a rotary tool 5 having a rotating tip formed integrally with a shaft 3. The rotary tool is formed of a thermosetting resin containing inorganic long fibers with a high degree of hardness as an abrasive means in an amount from 50% to 81% by volume. The long inorganic fibers can have a diameter in the range of 3 µm to 30 µm. In one of the embodiments of Kikutani et al., the rotating tip is formed as a column or cylinder with elements 6 which correspond to the bristle of a brush extending from the tip, as is reproduced in Figure 31.

U.S. Patent Nos. 5,152,917 and 5,304,223 (Pieper et al.) teach coated abrasive articles comprising precisely shaped abrasive composites bonded to a backing. The abrasive composites comprise binder and abrasive particles. The precisely shaped composites can be in the form of, for example, pyramids, sawtooth grooves, or linear grooves. The maximum distance between corresponding points on adjacent composite shapes can be less than one millimeter. The coated abrasive of Pieper et al. can be made, for example, according to the following general procedure. First, a slurry containing abrasive grains and binder is introduced to a production tool. Second, a backing is introduced to the outer surface of the production tool such that the slurry wets the front side of the backing. Third, the binder is at least partially cured. Fourth, the production tool is removed from the backing.

U.S. Patent No. 5,316,812 (Stout et al.) teaches a thermoplastic backing for use in abrasive articles. A resinous binder adheres abrasive particles to the thermoplastic backing.

U.S. Patent Nos. 5,174,795 and 5,232,470 (Wiand) teach a planar abrasive article comprising a sheet portion with a plurality of protrusions extending therefrom. Abrasive particles are homogeneously dispersed throughout the moldable material comprising the article. Wiand teaches one embodiment having short protrusions extending 1.6 mm (.063 in) from the backing and having a 3.2 mm (0.125 in) diameter, and another embodiment having short protrusions extending 1.3 - 1.5 mm (0.05 - 0.06 in) from the backing and having a 1.3 mm (0.05 in) diameter.

G.B. Patent Application No. 2.043,501, (Dawkins) discloses an abrasive article for polishing ophthalmic workpieces. The abrasive article is made by injection molding a mixture of abrasive grains and a thermoplastic binder to form an abrasive article comprising a flexible backing having a plurality of upstanding projections, the ends of which act as operative abrading surfaces.

U.S. Patent No. 5,427,595 (Pihl et al.) discloses an extruded abrasive filament including a first elongate filament component having a continuous surface throughout its length and including a first hardened organic polymeric and a second elongate filament component coterminous with the first elongate filament component, including a second hardened organic polymeric material in melt fusion adherent contact with the first elongate filament component along the continuous surface. The second hardened organic polymeric material can be the same or different than the first hardened organic polymeric material. At least one of the first and second hardened organic polymeric materials includes a thermoplastic elastomer having abrasive particles adhered therein. Also disclosed is an abrasive article comprised of at least one abrasive filament mounted to a substrate such as a hub adapted to be rotated at a high rate of revolution.

U.S. Patent No. 5,460,883 (Barber et al.) discloses a composite abrasive filament which includes at least one preformed core at least partially coated with a thermoplastic elastomer having abrasive particles dispersed and adhered therein, the thermoplastic elastomer and abrasive particles together comprising a hardened composition. The composite abrasive filament has a hardened composition over at least a portion, preferably over the entire surface of at least one preformed core. The preformed core is formed in a step separate from and prior to one or more coating steps, one of which coats the preformed core with abrasive-filled thermoplastic elastomer.

Polyamide, also known as "Nylon", filaments were developed in the late 1950's as a synthetic alternative to natural filaments. At about that time an extrusion process was developed for dispersing abrasive particles uniformly in a nylon matrix in the form of a filament (U.S. Pat. Nos. 3,522,342 and 3,947,169). A review of polyamide abrasive filaments is presented by Watts, J.H., "Abrasive Monofilaments-Critical Factors that Affect Brush Tool Performance", Society of Manufacturing Engineers Technical Paper, 1988, a written version of a presentation by the author at the WESTEC Conference, held March 21-24, 1988. It is known to use conventional inorganic abrasive particles with such polyamide filaments. As explained by Watts, as filaments of this type wear, new abrasive particles are exposed. An abrasive filament brush tool made using a plurality of these filaments is thus regenerated during use. While adequate for many purposes, various polyamides have property limitations which make their use less than optimal for certain applications of abrasive filaments. U.S. Patent No. 5,427,595, Pihl et al., addresses such limitations and describes the use of thermoplastic elastomers in abrasive filaments to reduce or overcome such limitations. The filaments of Pihl et al. include a core component and a sheath component which are coextruded. Either or both of the core and sheath includes abrasive particles adhered therein. Pihl et al. teaches the use of conventional inorganic abrasive particles, although the claims of Pihl et al. are not limited to any particular type of abrasive particle.

U.S. Patent No. 5,460,883, Barber, Jr., et al., also addresses the limitations of polyamides and describes the use of thermoplastic elastomers in abrasive filaments to reduce or overcome such limitations. The filaments of Barber et al. include a preformed core component and a sheath component coated onto the core to form a composite filament. The coated sheath includes abrasive particles adhered therein. Barber et al. teaches the use of conventional inorganic abrasive particles, although the claims of Barber et al. are not limited to any particular type of abrasive particle.

Brushes incorporating abrasive bristles or filaments have been used for many years to polish, clean and abrade a wide variety of substrates. These brush products typically have a plurality of bristles or filaments that contact the substrate. Abrasive particles can be added to bristles to increase their abrasiveness. The brushes may be made as follows. A mixture of abrasive particles and any suitable thermoplastic binder may be combined and then extruded to form a bristle or abrasive filament. The abrasive filament is then cut to the desired length. A plurality of these abrasive filaments are then mechanically combined to form a brush segment. Next, a plurality of these brush segments may be installed on a hub or plate to form a brush.

The abrasive particles typically employed in abrasive filaments and brushes described above have been limited to inorganic particles which necessarily have a high hardness, e.g. greater than 7 and usually greater than 9 on the Mohs hardness scale. The abrasive particles are sufficiently temperature resistant so as not to be deleteriously affected by the bristle or filament manufacturing process. Such abrasive particles are used in abrasive filaments and brushes to refine the surface of a workpiece. In some instances, this refinement is to remove a portion of the workpiece. In other instances, this refinement is to remove unwanted material (e.g., debris, oil residue, oxide layer, paint, etc.) from the workpiece surface. In some applications, it is desired to remove this unwanted material without any removal or abrasion of the underlying workpiece. However the abrasive particles in the abrasive filaments can be so "aggressive" that the abrasive filaments remove the unwanted material along with the workpiece surface.

U.S. Patent Nos. 3,090,061 and 3,134,122 to Charvat disclose the use of plastic beads on hard wire bristles to maintain the desired spacing of the bristles when assembled into a brush. Charvat teaches that this is effective to properly space and control the bristles to prevent undue compacting of the brush face and to assure equal frequency of tip contacts per unit length of brush face. The preferred brush bristle taught by Charvat is a steel wire have a Knoop hardness of at least 600, and in some cases in excess of 700 and even in excess of 800. Charvat also teaches that the bristle material may comprise any suitable brush bristle, including nylon and glass filament bristles, and that the beads need not be apertured bodies on the bristles, but may be spaced globules and protuberances adhered to the bristles which are not necessarily concentric therewith. The plastic beads and bristles are coated with a thin plastic coating. Charvat does not teach or suggest that the plastic bead spacer or buffer can instead be used as an abrasive particle. In fact, Charvat teaches the use of bristle materials that are much harder and more abrasive than the plastic beads, and also suggests including conventional inorganic abrasive particles in the plastic beads. Charvat teaches that the plastic coating and beads will erode during operation and that the protruding bristle ends are adapted to operate on the work in the manner of a true brush.

US-A- 3618154 discloses in figures 15 and 16 an integrally molded abrasive brush comprising abrasive filaments with abrasive particles dispersed therethrough.

It is seen that there is a need to provide an abrasive brush that is easily and inexpensively manufactured, and which provides suitable durability and abrading characteristics. It is also seen that there is a need to provide a filament having abrasive particles that can remove foreign material from a workpiece surface efficiently without damage to the workpiece surface, or provide a desired fine finish to the workpiece surface.

### SUMMARY OF THE INVENTION

The present invention provides an integrally-molded abrasive brush for use with a rotary tool at a rotational speed of at least 1000 rpm, the brush comprising:
a base having a first side and a second side, wherein said base is generally planar;
a plurality of bristles extending from said first side of said base, wherein said bristles have an aspect ratio of at least 2, and wherein said bristles are integrally molded with said base; and
attachment means provided on said base for attaching said abrasive brush to a tool wherein said molded abrasive brush comprises a thermoplastic elastomeric material and wherein said bristles include abrasive particles interspersed in said elastomeric material.

The thermoplastic elastomer may comprise abrasive particles interspersed throughout the abrasive brush.

The bristles may have an aspect ratio of at least 5. In one preferred embodiment, the bristles have an aspect ratio of at least 7. In another preferred embodiment, the bristles have an aspect ratio of at least 10. In a further preferred embodiment, the bristles have an aspect ratio of at least 20.

In one preferred embodiment, the bristles each comprise a root adjacent the base and a tip opposite the base, and the bristles are tapered so as to be wider at the root than at the tip. The bristles may be tapered at a first portion adjacent the root and have a constant thickness at a second portion adjacent the tip. The bristles may include a fillet radius at the transition from the root to the base.

The bristles may be coplanar with the base. In one preferred embodiment, the bristles extend radially from the outer edge of the center portion. In another preferred embodiment, the bristles are evenly angularly spaced about the outer edge.

In one preferred embodiment, the attachment means comprises a threaded stud integrally molded with the base extending from the second side of the base. In another preferred embodiment, the base further comprises an inner edge, and the attachment means comprises a root integrally molded with the molded brush, the root extending from the inner edge and including a neck portion adjacent the inner edge and a base portion remote from the inner edge, the base portion being wider than the neck portion. In another preferred embodiment, the base further comprises an inner edge, and the attachment means comprises a keyway formed in the inner edge, the keyway configured to engage with a corresponding key formed in a drive means. In another preferred embodiment, the base further includes an inner edge, and the inner edge and outer edge comprise concentric circles bounding the base. In one preferred embodiment, the inner edge is configured to accept a drive shaft therethrough, and the base further comprises a mounting hole therein for accepting a locking rod therethrough.

In the case in which the base comprises an inner edge and an outer edge, the inner edge and the outer edge may each comprise arcuate circular segments comprising an angular size equal to one another and no greater than 180°, the base further comprising a first radial edge extending from a first end of the inner edge to a first end of the outer edge, and a second radial edge extending from a second end of the inner edge to a second end of the outer edge. In one preferred embodiment, the angular size equals 180°. In another preferred embodiment, the angular size equals 120°. In yet another embodiment, the angular size equals 90°.

In one preferred embodiment, the thermoplastic elastomer comprises a polyester based thermoplastic elastomer.

In any of the above molded brushes, the moldable polymer can preferably further comprise a lubricant.

In one aspect of any of the above brushes, the abrasive particles comprise inorganic abrasive particles. In another aspect, the abrasive particles comprise organic abrasive particles.

In any of the above brushes, the base may preferably be circular. In another aspect, the base may preferably be polygonal.

For the purposes of the present invention, there are four major types of bristles including abrasive particles. In the first type, the abrasive particles are interspersed nearly uniformly and preferably uniformly throughout the thermoplastic matrix. In this first type, this results in a substantially homogeneous abrasive bristle. In the second, third and fourth types, the abrasive bristle comprises a sheath and a core. In the second type, the sheath comprises the thermoplastic matrix having the abrasive particles interspersed throughout at least a portion thereof. The core an comprise either a second thermoplastic material coextruded with the sheath, or a preformed core having the sheath coated over it. In the third type, the core comprises the thermoplastic matrix having the abrasive particles interspersed throughout at least a portion thereof and the sheath comprises a second thermoplastic material. In the fourth type, the sheath and core both comprise a thermoplastic matrix having abrasive particles interspersed throughout at least a portion thereof. In these four embodiments, either the thermoplastic matrix and/or the abrasive particles may be different between the sheath and core.

The term "interspersed" means that the abrasive particles are embedded within and located throughout the thermoplastic material that forms the filament. In the case of the core/sheath embodiments, "interspersed" means that the abrasive particles are embedded within and located throughout the thermoplastic matrix that forms the core or sheath, or both, as appropriate. The particles are interspersed so as to create a substantially homogenous distribution, though not necessarily an absolutely homogenous distribution. Furthermore, while the majority of the particles are wholly embedded within the thermoplastic matrix, this does not preclude the possibility of having some exposed particles at the surface that extend partially outside of the thermoplastic matrix.

The term "thermoplastic matrix" means that the material is capable of being heated to a molten state and then subsequently cooled to a solid state. The thermoplastic matrix can be any thermoplastic elastomer, as described herein.

As used herein, the term "hardened" refers to the physical state of the thermoplastic materials when the temperature of the thermoplastic polymer or thermoplastic elastomer is below the melting or dissociation temperature. The term can also be used to describe the room temperature (i.e. about 10 to about 40°C) hardness (Shore D scale) of the thermoplastic material. It is preferred that the room temperature Shore D durometer hardness of the thermoplastic materials used in the invention be at least about 30, more preferably ranging from about 30 to about 90, as determined by ASTM D790. The term is not meant to include physical and/or chemical treatment of the thermoplastic matrix or thermoplastic elastomer/abrasive particle mixture to increase its hardness.

The term "abrasive particles" means that there are discrete entities or particulates present in the thermoplastic matrix. The term "plastic abrasive particles" means that the abrasive particles are formed from an organic material. It is preferred that the particles be formed from either a thermosetting or thermoplastic polymer. Examples of such plastic abrasive particles include polypropylene, polyester, polycarbonate, polystyrene, methacrylate, methylmethacrylate, and polyvinylchloride. Still other examples of plastic abrasive particles include the crosslinked polymers of phenolic, epoxy, ureaformaldehyde, acrylate, and melamine-formadehyde based materials.

"Preformed core", as used herein, means one or more core elements which is formed in a step separate from and prior to one or more coating steps, one of which coats the preformed core with thermoplastic sheath; in other words, a preformed core is not made simultaneously with the hardened composition. The cross-section of the preformed core is not limited as to shape; however, preformed cores having substantially round or rectangular cross-sections have been found suitable.

The preformed core preferably extends through the entire length of the bristle, but this is not required. It is also not required that the preformed core cross-section have the same cross-section as the overall bristle, and the preformed core and hardened composition can be concentric or eccentric, with a single or plurality of core elements being possible.
The preformed core can be continuous individual metallic wires, a multiplicity of continuous individual metallic wires, a multiplicity of non-metallic continuous filaments, or a mixture of the latter two, provided that the melting temperature of the preformed core is sufficiently high so that a coating of abrasive-filled molten thermoplastic can be applied to at least a portion of the preformed core, and the molten thermoplastic cooled rapidly enough to maintain the integrity of the preformed core.
Preferred preformed cores include single and multistranded metallic cores, e.g., plain carbon steels, stainless steels, and copper. Other preferred preformed cores include a multiplicity of non-metallic filaments e.g. glass, ceramics, and synthetic organic polymeric materials such as aramide, polyamide, polyester, and polyvinyl alcohol.

### BRIEF DESCRIPTION OF THE DRAWINGS

The present invention will be further explained with reference to the appended Figures, wherein like structure is referred to by like numerals throughout the several views, and wherein:
Figure 1 is a cross sectional view of a first embodiment of an abrasive brush made in accordance with the present invention;
Figure 2 is a plan view of the abrasive brush of Figure 1;
Figure 3 is an elevational view of the abrasive brush of Figure 1 in operation;
Figure 4 is a cross sectional view of one embodiment of the bristle of the brush of Figure 1;
Figure 5 is a cross sectional view of a further embodiment of the bristle of the brush of Figure 1;
Figure 6 is a partial cross sectional view of an alternate embodiment of an abrasive brush including a reinforcing means according to the present invention;
Figure 7 is a view like Figure 6 of an alternate reinforcing means according to the present invention;
Figure 8 is a plan view of an alternate embodiment of an abrasive brush made in accordance with the present invention;
Figure 9 is a cross-sectional view of the brush of Figure 8 taken along plane 9-9;
Figure 10 is a plan view of a brush assembly according to the present invention having a plurality of abrasive brushes mounted on a backing;
Figures 11A-11D are cross-sectional views taken along plane 11-11 of the brush assembly of Figure 10, showing alternate embodiments of means for mounting the abrasive brushes on the backing;
Figure 12 is a plan view of a first embodiment of a radial abrasive brush segment according to the present invention;
Figure 13 is a cross sectional view of the brush segment of Figure 12, taken along line 13-13;
Figure 14a is an isometric view of a plurality of brush segments of Figure 12 being assembled onto a shaft to form a brush assembly;
Figure 14b is a view like Figure 14a, with the individual brush segments adjoining one another;
Figure 15 is a cross sectional view of a second embodiment of a radial abrasive brush segment according to the present invention;
Figure 16 is a plan view of a third embodiment of a radial abrasive brush segment according to the present invention;
Figure 17 is an end view of a plurality of brush segments of Figure 16 assembled together on a shaft;
Figures 18a-18d are cross sectional views of various embodiments of the bristle of the brush segment of the present invention, taken along line 18-18 of Figure 12;
Figure 19 is a partial elevation view of the brush segment of Figure 12 in operation;
Figure 20 is a plan view of a fourth embodiment of a radial abrasive brush segment according to the present invention;
Figure 21 is a partial plan view of a brush segment mounted on a shaft illustrating an alternate embodiment of an attachment means;
Figure 22 is a plan view of a brush segment illustrating a further embodiment of an attachment means;
Figure 23 is a cross sectional view of the brush segment of Figure 22, taken along line 23-23;
Figure 24 is a schematic illustration of a first apparatus and method for carrying out the present invention;
Figure 25 is a partial cross sectional view of a mold and ejector according to the present invention;
Figure 26 is a schematic illustration of a second apparatus and method for carrying out the present invention;
Figure 27 is an elevational view of the mold of Figure 26;
Figure 28 is a sectional view of a first embodiment of the mold portions of Figure 26, taken along line 28-28 of Figure 27;
Figure 29 is a view like Figure 28 of an alternate embodiment of the mold portions of Figure 28; and
Figure 30 is a sectional view taken along line 30-30 of Figure 12; illustrating an alternate embodiment of the brush segment made by the mold of Figure 29.
Figure 31 is an isometric view of a known rotary tool;
Figure 32 is a perspective view of an embodiment of an abrasive filament accordance to the present invention;
Figures 33-39 each are an enlarged perspective view of a respective embodiment of an abrasive filament according to the present invention, having a portion of its sheath removed to show the core;
Figure 40 is a perspective view of an embodiment of a brush tool incorporating filaments according to the present invention;

### DETAILED DESCRIPTION OF THE INVENTION

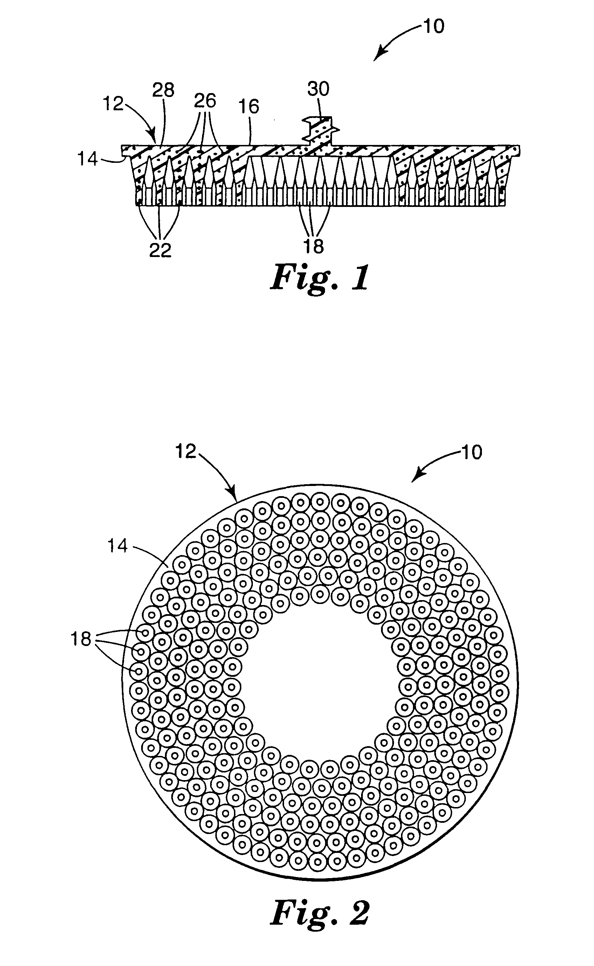

Referring to Figures 1 and 2, a first embodiment of abrasive brush 10 comprises a planar base 12 having first side 14 and second side 16. A plurality of bristles 18 project outwardly from first side 14 of base 12. In between bristles 18 there are spaces in which the first side 14 of the base 12 is exposed. Abrasive brush 10 is preferably integrally molded and comprises a generally homogenous composition of abrasive particles 26 in a moldable polymer 28.

The materials, manufacturing process and brush configuration will depend upon the desired refining application. As used herein, the term "refine" includes at least one of the following: remove a portion of a workpiece surface; impart a surface finish to a workpiece; descale a surface; deburr a surface; clean a workpiece surface, including removing paint or other coatings, gasket material, corrosion, oil residue, or other foreign material or debris; or some combination of the foregoing. In some applications, it may be preferred to provide aggressive abrasive characteristics, in which case the brush segment may comprise abrasive particles, larger size abrasive particles, harder abrasive particles, a higher abrasive particle to binder ratio, or some combination of the above. In other applications, it may be preferred to provide a polish type finish to the surface being refined, or to clean a surface without removing surface material itself, in which case the brush segment may employ no abrasive particles, smaller abrasive particles, softer abrasive particles, lower abrasive particle to binder ratio, or some combination of the above. It is possible to employ abrasive particles 26 of varied composition and hardness to obtain the desired abrading characteristics.

### Base

In a preferred embodiment, the base 12 is generally planar. However, it is within the scope of the invention to have a contoured or curved base. For example, base 12 may be convex, concave, or conical in shape. In such an arrangement, the bristles 18 may be of uniform length in which case tips 22 of the bristles will not be coplanar, or bristles may be of varying length in which case the tips may be coplanar. The base 12 may optionally contain a lip around its periphery where a portion of the base extends radially beyond the outermost bristles 18. The size of the lip is preferably minimized so that it does not interfere with maneuvering the abrasive brush 10 against surfaces bounding and at an angle relative to the surface of the workpiece.

In one preferred embodiment illustrated in Figures 1-7, the base 12 is of a suitable material and thickness to provide a flexible base 12, which helps maintain more bristles in contact with an uneven or irregular workpiece. The base 12 preferably is capable of flexing at least 10°, more preferably at least 20°, and still more preferably at least 45° without damage or substantial permanent deformation to the base. The desired degree of flexing also depends upon the intended refining application and the material of the workpiece. The ability to refine an uneven or irregular workpiece is enhanced when the flexible base 12 is combined with flexible bristles 18. The base 12 can preferably have a thickness of from about 1.0 to 15.0 mm, more preferably from about 1.5 to 10 mm, still more preferably from about 2.0 to 6 mm, and most preferably from about 2.5 to 4.0 mm. Base 12 is preferably circular as illustrated in Figure 2. The diameter of base 12 is preferably from about 2.5 to 20.0 cm (1.0 to 8.0 in), although smaller and larger bases are also contemplated. Base shapes other than circular are contemplated, including, but not limited to, oval, rectangular, square, triangular, diamond, and other polygonal shapes, as are relatively rigid or inflexible bases.

Preferably, the base 12 is molded integral with the bristles 18 to provide a unitary abrasive brush. Thus, no adhesive or mechanical means is required to adhere the bristles 18 to the base 12. It is preferred that the base 12 and bristles 18 are molded simultaneously. In some instances, there may be a single mixture of abrasive particles 26 and moldable polymer 28 that is placed in the mold in a single injection process. In such an embodiment, the abrasive brush 10 comprises a generally homogenous composition throughout. However, due to the molding process, the abrasive particle/binder mix may not be perfectly homogeneous. For example, as the polymer and abrasive mix is injected into the mold, the effects of the narrow bristle cavities may be to cause more polymer to initially cool adjacent the inside of the bristle cavity near the base, forcing a mix having a somewhat higher concentration of abrasive particles toward the tip 22 of the bristle.

Alternatively, there may be two or more insertions of a moldable polymer 28 to the mold. For example, one insertion may contain a mixture of moldable polymer 28 and abrasive particles 26. This mixture is primarily located in the bristles 18. A second insertion may contain moldable polymer 28 without abrasive particles 26, or with fewer abrasive particles. The moldable polymer 28 without abrasive particles would be present primarily in the base 12 of the abrasive brush 10.

It is also within the scope of this invention to have two insertions, both containing abrasive particles. The first insertion may have larger abrasive particles, while the second insertion may have smaller and/or softer abrasive particles. During abrading, the coarse abrasive particles are used and then the finer abrasive particles are used.

### Bristles

The bristles 18 extend from the first side 14 of base 12, with root 20 adjacent the base 12 and tip 22 remote from the base 12. The bristles 18 may have any cross sectional area, including but not limited to, circular, star, half moon, quarter moon, oval, rectangular, square, triangular, diamond or polygonal. In one preferred embodiment, the bristles 18 comprise a constant circular cross section along the length of the bristle 18. In other preferred embodiments, the bristles 18 will have a non-constant or variable cross section along all or a portion of the length of the bristle.

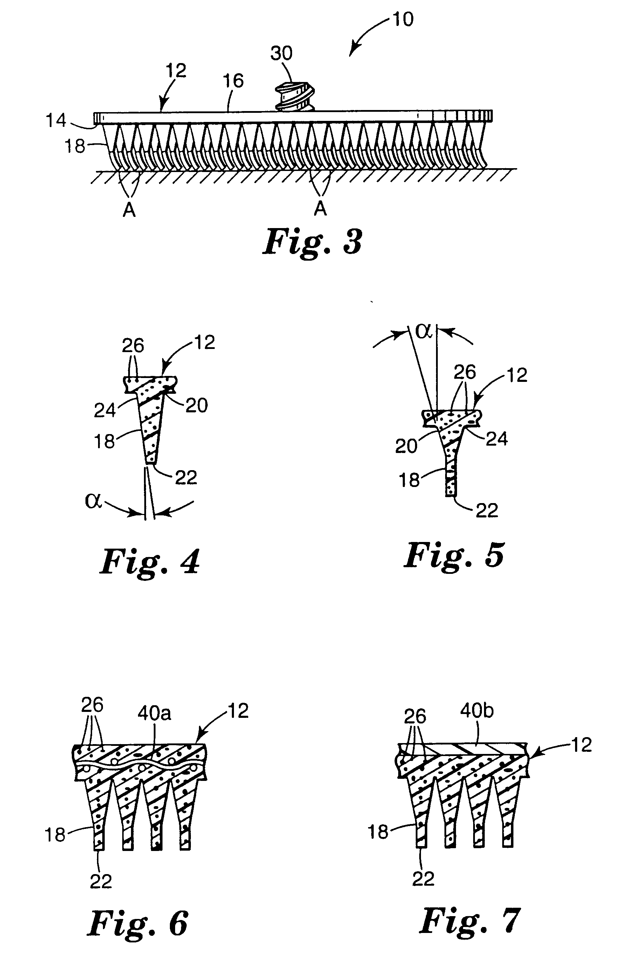

It is preferred to have tapered bristles such that the cross sectional area of the bristle decreases in the direction away from base 12. Tapered bristles 18 can have any cross section as described above, and preferably have a circular cross section. Tapered bristles 18 tend to be easier to remove from the mold during fabrication of the abrasive brush than constant cross sectional area bristles 18. Furthermore, bristles 18 are subjected to bending stresses as abrasive brush 10 is rotated against a workpiece as illustrated in Figure 3. These bending stresses are highest at the root 20 of bristles 18. Therefore, a tapered bristle such as illustrated in Figures 4 and 5 is more able to resist bending stresses than a cylindrical bristle 18. Furthermore, brush 10 preferably includes a fillet radius 24 at the transition between the root 20 of the bristle 18 and the first surface 14 of the base. Fillet 24 can have a radius of from about 0.25 to 2.5 mm (.010 to 0.100 in), and more preferably from about 0.5 to 1.3 mm (.020 to .050 in). In one preferred embodiment illustrated in Figure 4, bristles 18 are conical, having a decreasing diameter along the entire length. In another preferred embodiment illustrated in Figure 5, bristles 18 have a tapered portion adjacent the base and a cylindrical portion for the remainder of the bristle. In one preferred embodiment, the taper extends from root 20 to approximately 80% of the length towards the tip 22, and the bristle is cylindrical for the remainder of the length to tip 22. The taper can comprise any suitable angle, and in one preferred embodiment is approximately 3° as measured at angle α in Figures 4 and 5.

Bristles 18 comprise an aspect ratio defined as the length of bristle 18 measured from root 20 to tip 22, divided by the width of the bristle. In the case of a tapered bristle, the width is defined as the average width along the length for purposes of determining the aspect ratio. In the case of non-circular cross section, the width is taken as the longest width in a given plane, such as the corner-to-corner diagonal of a square cross section. In one preferred embodiment illustrated in Figures 1-7, the aspect ratio of bristles 18 is preferably at least 1, more preferably from about 4 to 18, and still more preferably from about 6 to 16. The size of bristles 18 can be selected for the particular application of brush 10. The length of the bristles 18 is preferably from about 5 to 80 mm, more preferably from about 5 to 50 mm, still more preferably from about 5 to 25 mm, and most preferably from about 10 to 20 mm. The width of the bristles 18 is preferably from about 0.25 to 10 mm, more preferably from about 0.5 to 5.0 mm, still more preferably about .75 to 3.0 mm, and most preferably from about 1.0 to 2.0 mm. In one preferred embodiment, all of the bristles 18 have the same dimensions. Alternatively, bristles 18 on a single brush 10 may have different dimensions such as different lengths, widths or cross sectional areas. The lengths of the bristles 18 and contour of the base 12 are preferably chosen so that the tips 22 are generally coplanar, although other arrangements are also contemplated by the present invention.

The density and arrangement of the bristles 18 can be chosen for the particular application of abrasive brush 10. The bristles 18 may be arranged on the base 12 in a random or ordered pattern. If the base 12 is circular, it is preferred to have the bristles 18 arranged in concentric circular rings. As abrasive brush 10 is rotated to treat a workpiece, those bristles near the center of the base 12 travel at a slower linear speed than the bristles 18 near the periphery of the base 12. Therefore, bristles 18 at or near the center of the base 12 would do less work relative to the bristles 18 remote from the center. Accordingly, brush 10 may have a portion of first face 14 at the center of base 12 which does not include any bristles 18 as illustrated in Figure 2. The bristles 18 may or may not abut adjacent bristles as desired. The density of bristles 18 preferably ranges from about 5 to 30 bristles/cm², more preferably from about 10 to 25 bristles/cm², still more preferably from about 15 to 20 bristles/cm² and most preferably about 20 bristles/cm². The bristles may be present over only a portion of first side 14 of base 12, or substantially the entire first side 14 of base 12.

The material, length, and configuration of the bristles are preferably chosen such that bristles 18 are sufficiently flexible to aid in refining uneven or irregular workpieces. The bristles 18 are preferably capable of bending at least 10°, more preferably at least 25°, still more preferably at least 45°, and most preferably at least 90°, without damage or substantial permanent deformation to the bristles. Preferably, base 12 is also flexible to further aid in refining such workpieces. When flexible bristles are used, the bristle contacts the workpiece surface at the juncture of the leading edge of the tip 22 and the outermost portion of the side surface of the bristle, as illustrated at A in Figure 3. This is in contrast to inflexible abrading protrusions having very low aspect ratios, as known in the art. Such protrusions primarily contact the workpiece with the entire planar surface at the tip of the protrusion.

In one preferred embodiment, bristles 18 are of equal length and extend from a planar base 12, resulting in the tips 22 being coplanar when the brush is at rest. It is also possible to have base 12 and bristle 18 arrangements in which the tips 22 of the bristles are not coplanar. For example, it is possible to have bristles near the periphery of the base be longer than the bristles at the center of the brush 10. This can be done to compensate for the deformation of the bristles caused by high rotational speed (as high as 22,000 RPM or more). Under such conditions, the bristles near the periphery of the base 12 travel at a higher speed than the bristles near the center of the base, and thus bend radially outwardly to a greater extent than the bristles near the center of the base. The at-rest height variation can be selected so as to achieve approximately coplanar bristle tips 22 at operating conditions.

### Attachment Means

Referring to Figure 1, abrasive brush 10 comprises attachment means 30 integral with base 12. The attachment means 30 provides a means to secure the abrasive brush 10 to a rotary tool and/or a support pad or a back up pad during use. It is preferred that the attachment means 30 is molded integrally with the base and bristles. Preferred attachment means are well known in the art and are described in U.S. Patent Nos. 3,562,968; 3,667,170; and 3,270,467. Most preferred is the integrally-molded threaded stud adapted for screw-type engagement with a rotary tool as taught by U.S. Patent No. 3,562,968. This type of attachment means is preferred for circular or disc shaped brush 10. It is preferred that the attachment means 30 be centered relative to the base 12 for proper rotation. The attachment means 30 may be made from the same material as the rest of the abrasive brush 10, and may contain abrasive particles 26. Alternatively, the attachment means 30 may be made from a separate injection of moldable polymer 28 without abrasive particles 26.

It is also within the scope of this invention to use a hook and loop type attachment such as that taught in U.S. Patent No. 5,077,870, "Mushroom-Type Hook Strip for a Mechanical Fastener, " (Melbye et al.) or of the type commercially available as SCOTCHMATE™ from Minnesota Mining and Manufacturing Company, St. Paul, Minnesota. It is also possible to use a hermaphroditic fastener such as DUAL LOCK™ fastener, available from Minnesota Mining and Manufacturing Company, to secure the abrasive brush to a back up pad. It is also possible to employ intermeshing structured surfaces such as taught in U.S. Patent No. 4,875,259, "Intermeshing Articles" (Appeldorn). Alternatively, the base of the abrasive brush may contain one or more straight or threaded holes or openings so that the abrasive brush may be mechanically secured (such as with a bolt and nut) to the back up pad.

### Reinforcing Means

The base portion may further comprise reinforcing means which can comprise a fiber reinforcing means 40a as illustrated in Figure 6. Reinforcing means 40a can comprise, for example, fabric, non-woven sheeting, mesh, scrim, and the like, or can comprise individual fibers compounded into the moldable polymer and dispersed throughout the abrasive brush. The reinforcing means may optionally contain a treatment to modify its physical properties. The purpose of the reinforcing means is to increase the flexural strength and tensile strength of the backing. Examples of reinforcing fibers suitable for use in the present invention include glass fibers, metal fibers, carbon fibers, wire mesh, mineral fibers, fibers formed of heat resistant organic materials, or fibers made from ceramic materials. Other organic fibers include polyvinyl alcohol fibers, nylon fibers, polyester fibers and phenolic fibers. If glass fibers are used, the moldable polymer mixture may preferably contain a coupling agent, such as a silane coupling agent, to improve the adhesion to the thermoplastic material. The length of the fiber will range from about 0.5 mm to about 50 mm, preferably about 1 mm to about 25 mm, most preferably about 1.5 mm to about 10 mm. The fiber denier will be between about 25 to 300, preferably between 50 to 200.

The reinforcing means may comprise a reinforcing layer or substrate 40b as illustrated in Figure 7. Abrasive brush 10 comprises base 12 having attached to it on second side 16 a reinforcing substrate 40b. The purpose of the reinforcing substrate 40b is to increase the strength of the base 12. The reinforcing substrate 40b can be free of abrasive particles 26. It is not necessary to include abrasive particles in this layer, since the reinforcing substrate 40b does not contact the workpiece. The reinforcing substrate can comprise a moldable polymer. In this case, the reinforcing substrate can be molded at the same time as the abrasive brush 10. Alternatively, the reinforcing substrate 40b can be a backing type material such as a polymeric film, primed polymeric film, cloth, paper, vulcanized fiber, nonwoven layer, and treated versions thereof. In this case, the reinforcing substrate 40b can be inserted into the mold and the moldable polymer 28 forming the brush 10 can bond to the reinforcing substrate 40b. Alternatively, the reinforcing substrate 40b can be adhesively bonded to the brush 10 after the brush is molded. In one preferred embodiment, the reinforcing substrate 40b is coextensive with the base 12, although it may be smaller or larger as desired.

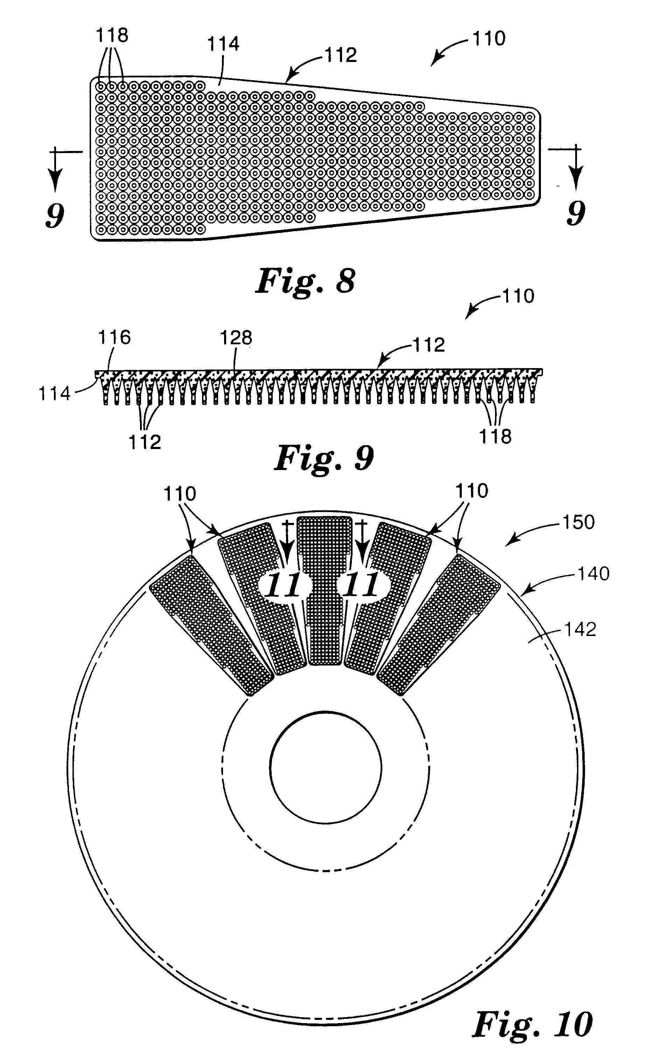

Referring now to Figures 8 and 9, there is seen an alternate embodiment of molded abrasive brush 110 according to the present invention. Abrasive brush 110 comprises planar base 112 which is a generally wedge-shaped polygon as shown. Base 112 has first side 114 and second side 116 opposite one another. Extending from first side 114 are a plurality of bristles 118. Bristles 118 may be tapered to have root 120 wider than tip 122 for all or a portion of the length of bristles 118 as described above with respect to the embodiment of Figures 1 and 2.

While abrasive brush 110 is configured for convenient use with rotary floor machines commonly used in floor maintenance procedures, its utility is not thereby limited. As seen in Figure 10, a plurality of abrasive brushes 110 may be mounted on a suitable backing 140 to form assembly 150. Suitable backings 140 include those available commercially as INSTA LOK™ drive assembly from Minnesota Mining and Manufacturing Company, St. Paul, Minnesota, which have been modified to have abrasive brushes 110 mounted thereon as described below. Backing 140 may be attached to rotary floor machines as is known in the art for refining a floor surface.

Preferably, abrasive brushes 110 are generally wedge-shaped and are arranged on backing 140 so as to have gaps therebetween where first surface 142 of backing 140 has no bristles 118. Abrasive brushes 110 may be preferably arranged in a substantially equal angular spacing around the backing 140. The segmented arrangement of bristles 118 and abrasive brushes 110 on backing 140 in combination with the generally parallel bristles 118 creates a series of "edges" which may allow the bristles 118 to reach recesses in an uneven surface, thus providing a treatment efficiency greater than a similar brush assembly without a segmented treatment surface. The segmented arrangement also aids in reducing the amount of material which accumulates in the bristles 118. The open areas between brushes 110 provide space for material to accumulate and thereby lengthen the service life of the abrasive brush 110. The gaps also reduce the number of bristles 118 on a given backing 140 which results in an increased pressure on the remaining bristles 118 during operation. The remaining bristles 118 must each support a greater force, and the resultant increase in pressure at the tips 122 of the bristles 118 further aids in improving the treatment efficiency of the inventive brush assembly. Alternatively, brushes 110 may be arranged to provide an uninterrupted arrangement of bristles 118 on backing 140. Or, a single brush 110 may be provided with a circular backing 112 conforming generally to the size of backing 140.

Abrasive brush 110 may comprise any of the moldable polymers 128, additives, and abrasive particles 126 as described herein. Abrasive brush 110 may omit abrasive particles 126. For applications such as floor scrubbing and polishing, one suitable moldable polymer 128 comprises polyester-based TPE such as is commercially available as Hytrel™ 5526 from E.I. Du Pont de Nemours, Wilmington Delaware, and 30% by weight 120 grade silicon carbide as abrasive particles 126.

It is possible to employ a plurality of like abrasive brushes 110 on an assembly 150. Alternatively, the abrasive brushes 110 may differ within a single assembly 150. For instance, it may be possible to employ abrasive brushes 110 having different moldable polymer 128, abrasive particles 126, length or arrangement of bristles 118, or any other parameter. It is also possible to employ bristles 118 having varying heights within a single abrasive brush 110.

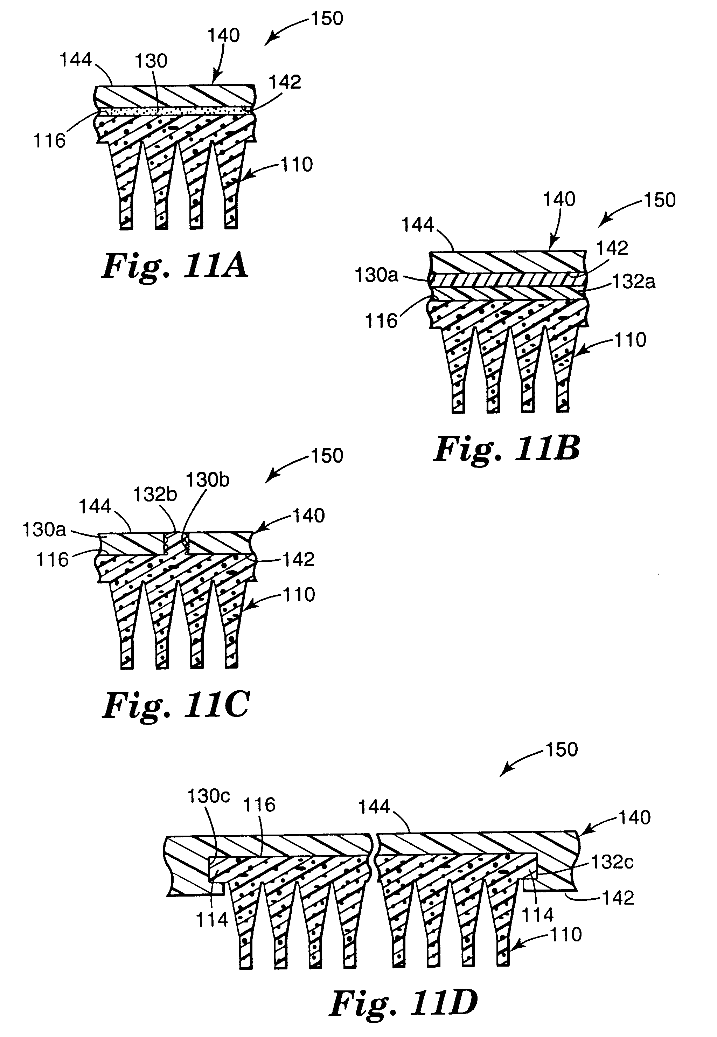

Abrasive brushes 110 may be permanently or removably secured to backing 140. As seen in Figure 11A, second side 116 of brush 110 may be joined to first side 142 of backing 140 by adhesive layer 130. Adhesive 130 may comprise any suitable adhesive including pressure sensitive adhesives and heat activated adhesives. Alternatively, the materials for abrasive brush 110 and backing 140 may be chosen to allow attachment by sonic welding.

Abrasive brush 110 may be mechanically secured to backing 140 by means of screws, bolts, rivets, clamps or the like. It is also possible to employ attaching layer 130a on first side 142 of backing 140 and complementary attaching layer 132a on second side 116 of abrasive brush 110 as illustrated schematically in Figure 11B. Attachment layers 130a and 132a may comprise a hook and loop type attachment system such as that taught in U.S. Patent No. 5,077,870, "Mushroom-Type Hook Strip for a Mechanical Fastener," (Melbye et al.) or of the type commercially available as SCOTCHMATE™ from Minnesota Mining and Manufacturing Company, St. Paul, Minnesota. It is also possible to use a hermaphroditic fastener such as DUAL LOCK™ fastener, available from Minnesota Mining and Manufacturing Company, to secure the abrasive brush to a back up pad. It is also possible to employ intermeshing structured surfaces such as taught in U.S. Patent No. 4,875,259, "Intermeshing Articles" (Appeldorn).

Abrasive brush 110 may be releasably secured to backing 140 by means of an integrally molded stud 130b extending from second side 116 of backing 112 as illustrated in Figure 11C. Stud 130b is sized and configured to releasably engage with hole 130b in backing 140 and may engage with second side 144 of backing 140. Alternatively, backing 140 may comprise slots 130c to slidingly engage rails 132c in backing 112 of brush 110 as illustrated in Figure 11D.

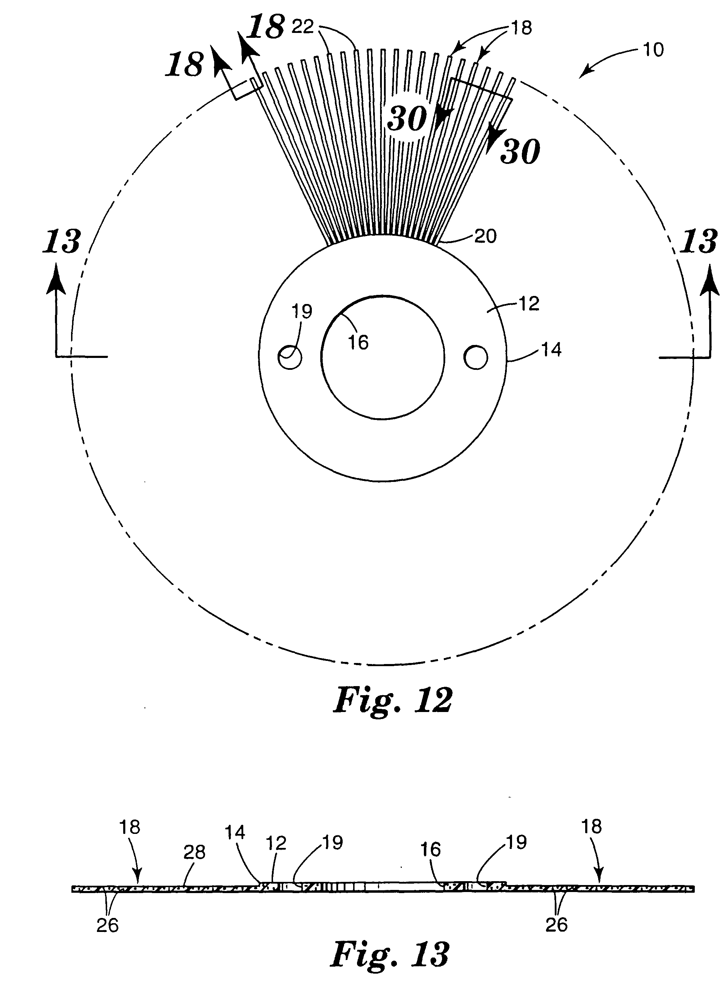

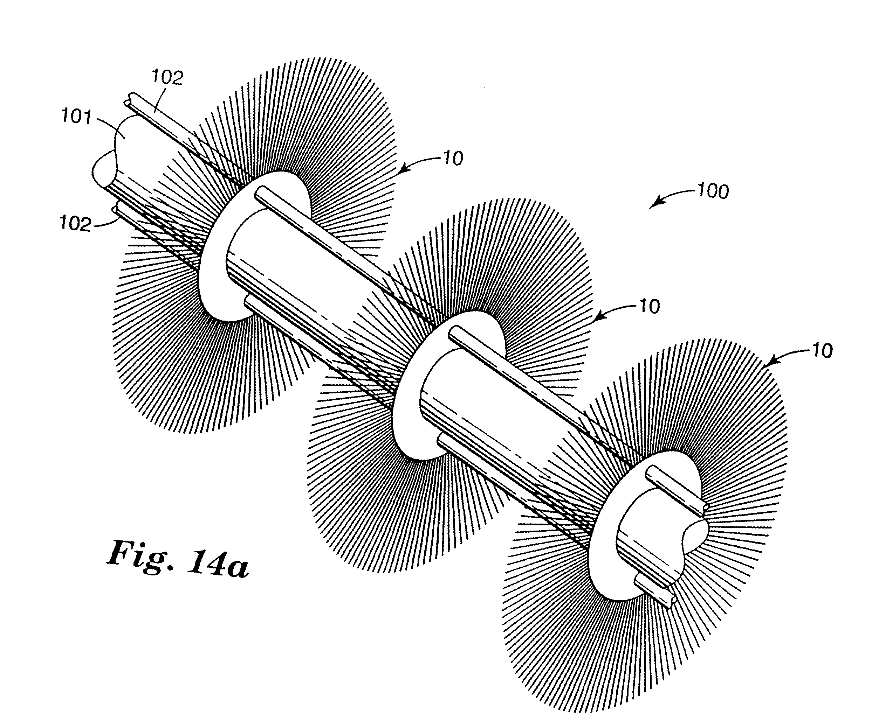

Referring to Figures 12 and 13, there is seen yet a further alternate embodiment of a molded abrasive brush according to the present invention. The terms "abrasive brush" and "abrasive brush segment" will be used interchangeably to refer to this embodiment. As illustrated in Figures 12 and 13, abrasive brush segment 10 comprises a base or center portion 12 having outer edge 14 and inner edge 16. A plurality of bristles 18 project outwardly from outer edge 14, beginning at bristle roots 20 and ending at bristle tips 22. There may be spaces between bristle roots 20 in which outer edge 14 of base or center portion 12 is exposed. Alternatively, adjacent bristles may adjoin one another at roots 20. Brush segment 10 is integrally molded such that bristles 18 and center portion 12 are continuous with one another. Brush segment 10 is preferably an abrasive brush segment which comprises a generally homogenous composition of abrasive particles 26 in a moldable polymer 28.

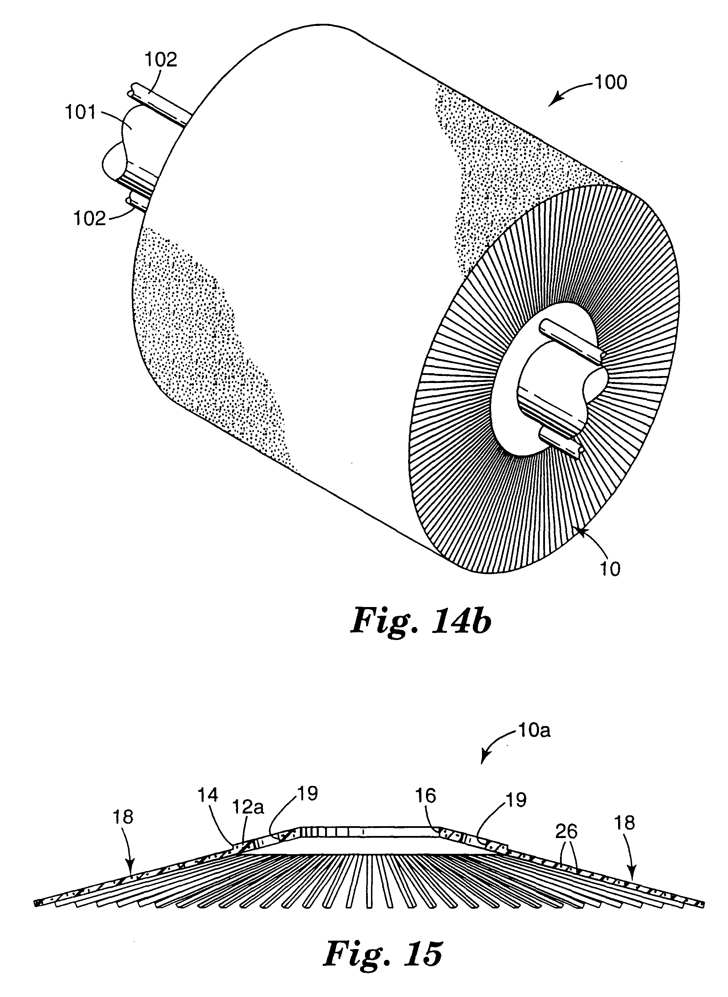

As illustrated in Figure 14a, a plurality of brush segments 10 can be assembled onto main shaft 101 to form a brush assembly 100. Any number of segments 10 may be assembled together to provide an assembly 100 of any desired width. Preferably, the brush segments 10 are adjacent one another such that there is essentially no space between the brush segments, as illustrated in Figure 14b. Alternatively, the brush segments 10 may be assembled onto to shaft 101 so as to have space between adjacent brush segments as illustrated in Figure 14a. For example, there may be 5 to 10,000 brush segments 10 assembled together to form assembly 100, although more or less may be used as desired. A means for providing segment-to-segment engagement may be included to reduce or eliminate rotation of adjacent brush segments relative to one another. Such engagement means can include, for example, an interengaging saw tooth pattern or hole and dimple pattern on the surfaces of center portion 12. For convenience, this embodiment may be referred to as a "brush segment" when it is intended to be combined with other segments into a brush assembly. However, it is understood that the term "brush segment" is not intended to exclude embodiments which are used themselves without being combined with other brush segments, and the term "brush" may also be used to refer to a brush segment.

### Center portion

The term "center portion" is generally used for convenience with respect to embodiments of brushes having the bristles extending generally radially outward as illustrated in Figures 12-22. The term "base" is generally used for convenience with respect to embodiments of brushes having bristles extending generally perpendicular to the base as illustrated in Figures 1-11. However, it is understood that the terms "base" and "center portion" are not thereby limited, and may be used interchangeably throughout. In the embodiment illustrated in Figure 12, center portion or base 12 is a continuous circumferential portion which is generally planar. It is also within the scope of the invention to have a contoured or curved center portion. For example, center portion 12 may be convex, concave, or conical in shape. As illustrated in Figure 15, center portion 12a is conical, with the bristles 18 extending parallel to the conical surface defined by the center portion.

Brush segment 10 may optionally have an attachment means on center portion 12, such as a channel, keyway, or a root to mechanically join several brush segments together on a drive means to provide a brush assembly. As illustrated in Figure 12, center portion 12 includes two mounting holes 19, through which a locking rod may be inserted. A brush assembly 100, having two locking rods 102 inserted through holes 19 is illustrated in Figure 14a. Shaft 101 and locking rods 102 may then be attached to a suitable rotary drive means.

In the embodiments illustrated in Figures 12-21, center portion 12 can preferably have a thickness of from about 0.5 to 25 mm, more preferably from about 1.0 to 10 mm, still more preferably from about 1.5 to 6 mm, and most preferably from about 1.5 to 3 mm. Center portion 12 is preferably circular as illustrated in Figure 12. The diameter of the outer edge 14 of center portion 12 is preferably from about 2.5 to 61.0 cm (1.0 to 24.0 in), although smaller and larger center portions are also within the scope of the invention. In one preferred embodiment, the center portion 12 is of a suitable material and thickness to provide a flexible center portion 12, which helps maintain more bristles in contact with an uneven or irregular workpiece. The center portion 12 preferably is capable of flexing at least 10°, more preferably at least 20°, and still more preferably at least 45° without damage or substantial permanent deformation to the center portion. Center portion shapes other than circular are also within the scope of the invention, including, but not limited to, oval, rectangular, square, triangular, diamond, and other polygonal shapes, as are relatively rigid or inflexible center portions.

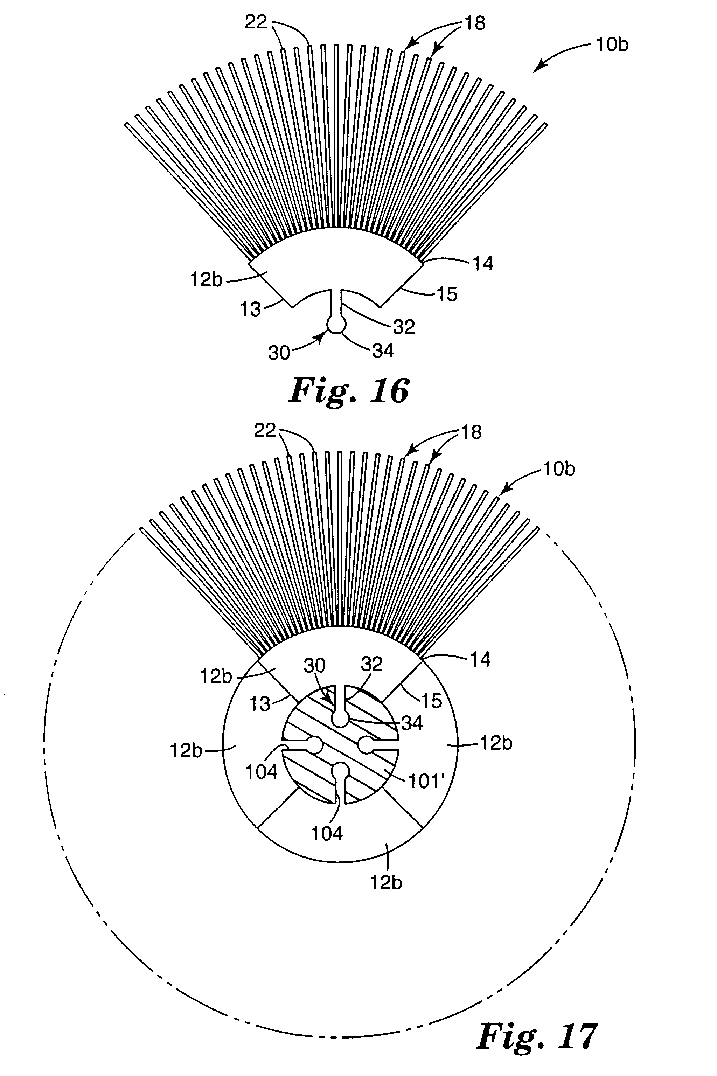

Center portion 12b may alternately be a ring sector as illustrated in Figure 16. In this embodiment, center portion 12b is bounded on each side by radial edges 13 and 15. Preferably, the ring sector is of an angular width that allows for an integer number of ring sectors to be assembled into a circumferential brush segment. For example, four 90° ring sectors 10b are readily arranged to make a 360° circumferential brush segment as illustrated in Figure 17.

Preferably, center portion 12 is molded integrally with the bristles 18 to provide a unitary brush segment. Thus, no adhesive or mechanical means is required to adhere bristles 18 to center portion 12. It is preferred that center portion 12 and bristles 18 are molded simultaneously. To make an abrasive brush segment, there may be a single mixture of abrasive particles 26 and moldable polymer 28 placed in the mold in a single injection process. In such an embodiment, the abrasive brush segment comprises a generally homogenous composition throughout. However, due to the molding process, the abrasive particle/binder mix may not be perfectly homogeneous. For example, as the polymer and abrasive mix is injected into the mold, the narrow bristle cavities may cause more polymer to initially cool adjacent the inside of the bristle cavity near the base, forcing a mix having a somewhat higher concentration of abrasive particles toward tip 22 of the bristle.

Alternatively, there may be two or more insertions of a moldable polymer 28 to the mold. For example, one insertion may contain a mixture of moldable polymer 28 and abrasive particles 26, located primarily in bristles 18. A second insertion may contain moldable polymer 28 without abrasive particles 26, or with fewer or a different type of abrasive particles, located primarily in center portion 12 of brush segment 10. It is also within the scope of this invention to have two insertions, both containing abrasive particles. The first insertion may have abrasive particles of a certain size, material, and/or hardness, while the second insertion may include different abrasive particles. During abrading, the abrasive particles nearer tip 22 are used first, and then the abrasive particles nearer root 20 are used.

### Bristles

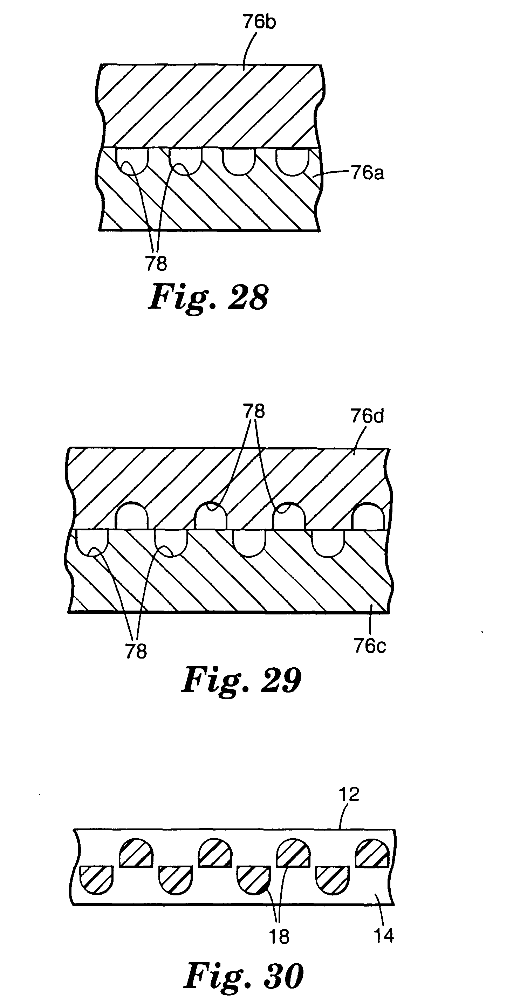

Bristles 18 extend from outer edge 14 of center portion 12, beginning at root 20 and ending at tips 22 remote from center portion 12. In one preferred embodiment, bristles 18 extend radially from the outer edge 14 of the center portion 12, and are coplanar with the center portion 12. For ease of molding (described more fully below), it is preferable that there is a single row of bristles 18 arranged around the outer edge 14. Alternatively, a double row of bristles may be formed, as illustrated in Figure 30. Bristles 18 preferably extend from outer edge 14 of center portion 12 in a plane parallel to the plane of center portion 12, whether center portion 12 is planar as illustrated in Figure 13, or conical as illustrated in Figure 15. Alternatively, bristles 18 may extend from outer edge 14 of center portion 12 at any oblique angle relative to the plane of the center portion.

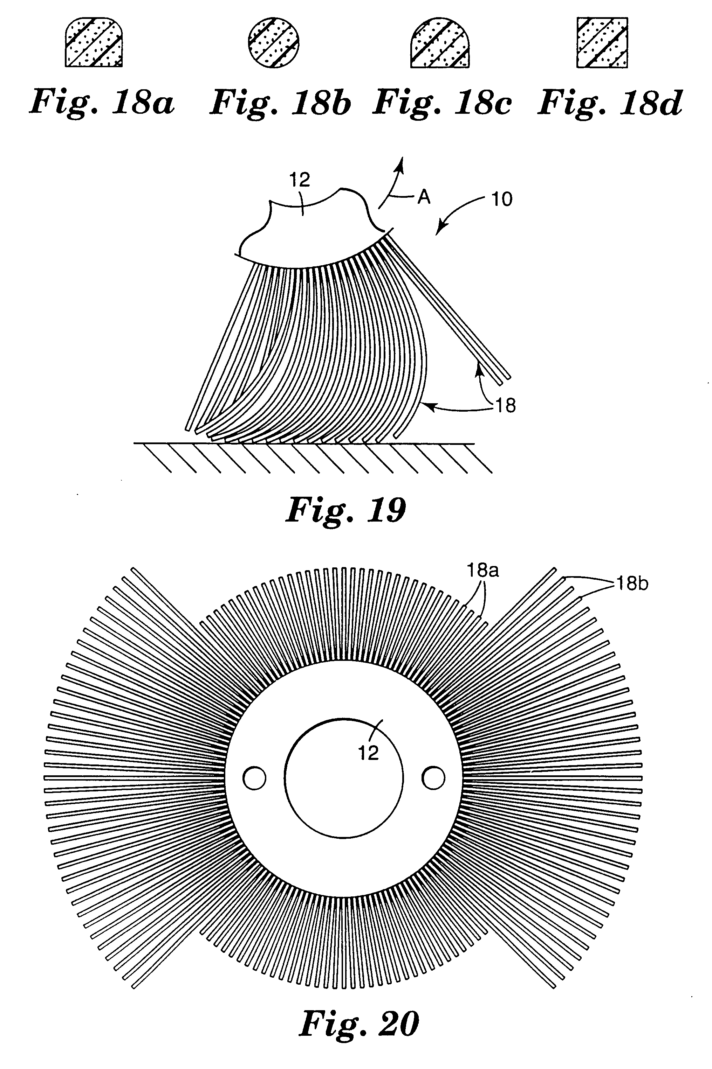

Bristles 18 may have any cross sectional area, including but not limited to, circular, star, half moon, quarter moon, oval, rectangular, square, triangular, diamond, or other polygonal shape. Some exemplary cross sections are illustrated in Figures 18a through 18d. In one preferred embodiment, bristles 18 comprise a constant cross section along the length of bristle 18. In other embodiments, bristles 18 will have a non-constant or variable cross section along the length of the bristle.

Bristles 18 may be tapered such that the cross sectional area of the bristle decreases in the direction away from root 20 towards tip 22. Tapered bristles 18 can have any cross section as described above. Bristles 18 are subjected to bending stresses as brush segment 10 is rotated against a workpiece as illustrated in Figure 19. These bending stresses are highest at the root 20 of bristles 18 (at outer edge 14). Therefore, a tapered bristle is more able to resist bending stresses than a bristle of constant cross sectional area. Bristles 18 can have a taper along the entire length, or can have a tapered portion adjacent the root 20 and a constant cross sectional area for the remainder of the bristle. The taper can comprise any suitable angle. Furthermore, brush segment 10 can include a fillet radius at the transition between root 20 of bristle 18 and outer edge 14 of center portion 12.

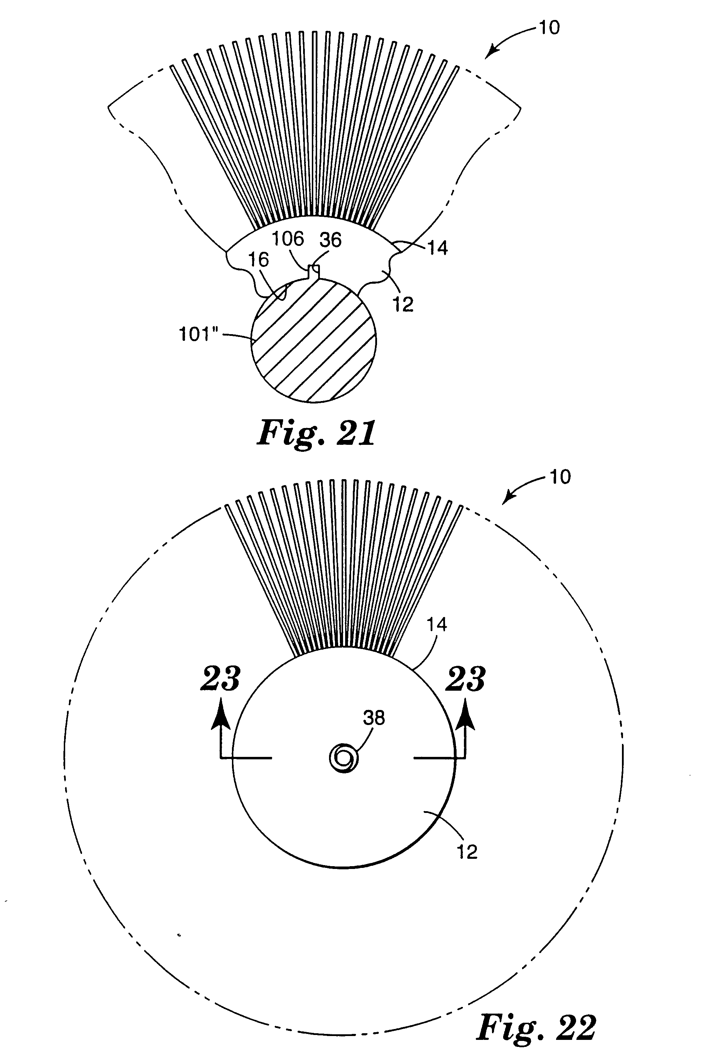

Bristles 18 comprise an aspect ratio defined as the length of bristle 18 measured from outer root 20 to tip 22, divided by the width of the bristle. In the case of a tapered bristle, the width is defined as the average width along the length for purposes of determining the aspect ratio. In the case of non-circular cross section, the width is taken as the longest width in a given plane, such as the corner-to-corner diagonal of a square cross section. With respect to the embodiments illustrated in Figures 11-23, the aspect ratio of bristles 18 is preferably at least 2, more preferably from about 5 to 100, and still more preferably from about 50 to 75. The size of bristles 18 can be selected for the particular application of brush segment 10 and brush 100. The length of bristles 18 is preferably from about 0.2 to 50 cm, more preferably from about 1 to 25 cm, and still more preferably from about 5 to 15 cm. The width of the bristles 18 is preferably from about 0.25 to 10 mm, more preferably from about 0.5 to 5.0 mm, still more preferably about 0.75 to 3.0 mm, and most preferably from about 1.0 to 2.0 mm. In one preferred embodiment, all of the bristles 18 have the same dimensions. Alternatively, bristles 18 on a brush assembly 100 comprising a plurality of brush segments 10 may have different dimensions such as different lengths, widths or cross sectional areas. For example, Figure 20 illustrates brush segment 10 having two groups of short bristles 18a and two groups of long bristles 18b. With respect to the embodiment illustrated in Figure 17, it is possible to arrange ring sector segments 10b, each having bristles of different length. With respect to the brush assembly 100 illustrated in Figures 14a and 14b, it is possible to employ adjacent brush segments 10 having different bristles.

The density and arrangement of bristles 18 can be chosen for the particular application of brush segment 10 and brush assembly 100. Bristles 18 preferably are arranged uniformly around the outer edge 14 of center portion 12. Alternatively, bristles 18 can be arranged in groups with spaces between the groups, and can be oriented in the plane of center portion 12 other than radially outward, that is, at a non-zero angle relative to the radius of center portion 12. Accordingly, brush segment 10 may have a portion of outer edge 14 which does not include any bristles 18. The bristles may be present over only a portion of outer edge 14 of center portion 12, or substantially the entire outer edge 14. Bristles 18 may or may not abut adjacent bristles as desired.

The material, length, and configuration of the bristles are preferably chosen such that bristles 18 are sufficiently flexible to aid in refining uneven or irregular workpieces. The bristles 18 are preferably capable of bending at least 25°, more preferably at least 45°, still more preferably at least 90°, and most preferably about 180°, without damage or substantial permanent deformation to the bristles.

It is possible to reinforce the bristles 18 with any suitable structure. For example, it is possible to place a reinforcing fiber or wire in the bristle mold cavities, and inject the moldable polymer 28 around the reinforcing wire. This will result in a bristle 18 having a reinforcing wire or fiber embedded within it.

### Attachment Means

Brush segment 10 preferably includes an attachment means for joining several brush segments together to form a brush assembly, or for attaching one or more brush segments 10 to a support means such as a hub or shaft. As illustrated in Figures 12 and 14, center portion 12 has inner edge 16 configured to engage with a shaft 101. Center portion 12 also includes mounting holes 19 for accepting locking rods 102. An alternate attachment means is illustrated in Figures 16 and 17, in which center portion 12b includes mounting root 30 comprising a neck 32 and base 34 configured to engage with a complementary configured slot 104 in shaft 101'. The arrangement illustrated in Figures 16 and 17 is well suited for brush segments which comprise ring sectors 12b. The mounting root 30 can support the ring sector in the radial direction during operation. Mounting root 30 can also be used with 360° brush segments 10, 10a. A further embodiment of an attachment means is illustrated in Figure 21, in which center portion 12 includes a channel or keyway 36 configured to engage a suitably configured key 106 in shaft 101".

In one preferred embodiment of the brush segment illustrated in Figures 12-13, the center portion 12 has an outer diameter at edge 14 of approximately 10 cm (4 inches), an inner diameter at edge 16 of approximately 5 cm (2 inches), and a thickness of approximately 2.0 mm (0.08 inches), with 144 bristles 18 extending radially outward from edge 14 in the plane of the center portion 12. Each bristle 18 is approximately 7.5 cm (3 inches) long and tapers from approximately 2.0 mm (0.08 inches) thick at the root to approximately 1.5 mm (0.06 inches) thick at the tip, with a cross section generally as illustrated in Figure 18c.

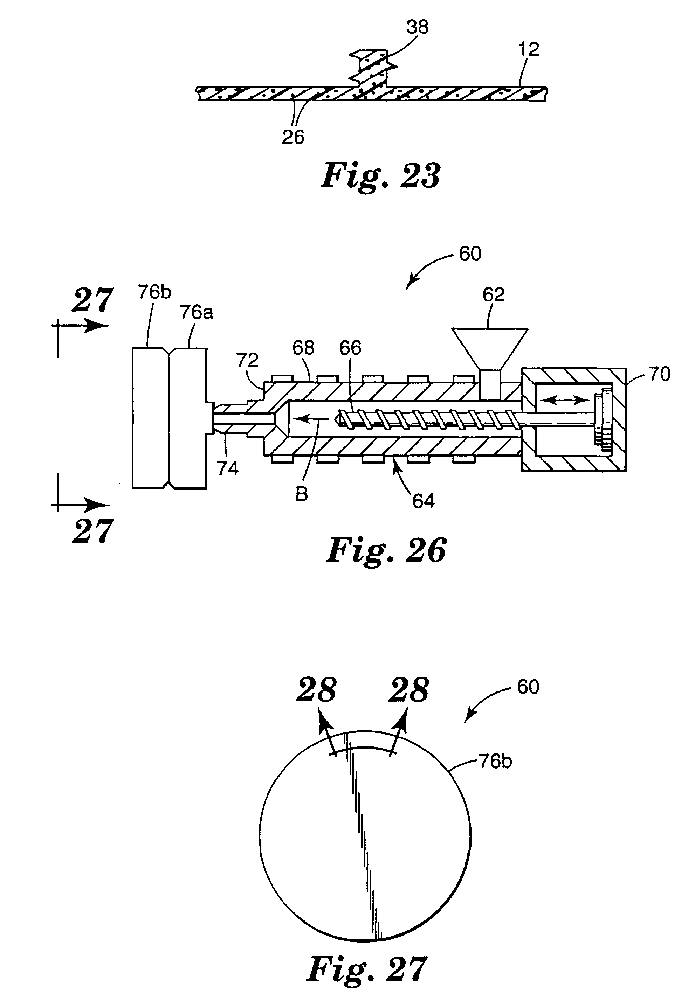

Still another alternate embodiment of the attachment means is illustrated in Figures 22 and 23. In this embodiment, center portion 12 is continuous, and does not include an opening defined by inner edge 16. The attachment means 38 is provided at the center of center portion 12. This type of attachment means is suitable for use with 360° circular brush segments. Suitable attachment means 38 are well known in the art and are described in U.S. Patent Nos. 3,562,968; 3,667,170; and 3,270,467. One preferred attachment means is the integrally-molded threaded stud adapted for screw-type engagement with a rotary tool as taught by U.S. Patent No. 3,562,968. It is preferred that the attachment means 38 is molded integrally with the center portion 12 and is centered relative to the center portion 12 for proper rotation of brush segment 10. The attachment means 38 may be made from the same material as the rest of the brush segment 10, and may contain abrasive particles 26. Alternatively, the attachment means 38 may be made from a separate injection of moldable polymer 28 without abrasive particles 26.

In one preferred embodiment of the brush segment illustrated in Figures 22-23, the center portion 12 has an outer diameter at edge 14 of approximately 10 cm (4 inches) and a thickness of approximately 2.0 mm (0.08 inches), with 144 bristles 18 extending radially outward from edge 14 in the plane of the center portion 12. Each bristle 18 is approximately 7.5 cm (3 inches) long and tapers from approximately 2.0 mm (0.08 inches) thick at the root to approximately 1.5 mm (0.06 inches) thick at the tip, with a cross section generally as illustrated in Figure 18c. The brush segment includes an integrally-molded threaded stud adapted for screw-type engagement with a rotary tool as taught by U.S. Patent No. 3,562,968.

In another preferred embodiment of the brush segment illustrated in Figures 22-23, the center portion 12 has an outer diameter at edge 14 of approximately 2.5 cm (1 inch) and a thickness of approximately 2.5 mm (0.1 inches), with 30 bristles 18 extending radially outward from edge 14 in the plane of the center portion 12. Each bristle 18 is approximately 2.25 cm (0.88 inches) long and tapers from approximately 3.0 mm (0.12 inches) thick at the root to approximately 2.0 mm (0.08 inches) thick at the tip, with a cross section generally as illustrated in Figure 18c. The brush segment includes an integrally-molded threaded stud adapted for screw-type engagement with a rotary tool as taught by U.S. Patent No. 3,562,968.

### Reinforcing Means

The center portion 12 may further comprise reinforcing means which can comprise a fiber reinforcing substrate. Reinforcing means can comprise, for example, fabric, non-woven sheeting, mat, mesh, scrim, and the like, or can comprise individual fibers compounded into the moldable polymer and dispersed throughout the brush segment. The reinforcing means may optionally contain a treatment to modify its physical properties. The purpose of the reinforcing means is to increase the flexural strength and tensile strength of the brush segment 10. Examples of reinforcing fibers suitable for use in the present invention include glass fibers, metal fibers, carbon fibers, wire mesh, mineral fibers, fibers formed of heat resistant organic materials, or fibers made from ceramic materials. Other organic fibers include polyvinyl alcohol fibers, nylon fibers, polyester fibers and phenolic fibers. If glass fibers are used, the moldable polymer mixture may preferably contain a coupling agent, such as a silane coupling agent, to improve the adhesion to the thermoplastic material. The length of the fiber preferably ranges from about 0.5 mm to about 50 mm, preferably about 1 mm to about 25 mm, most preferably about 1.5 mm to about 10 mm. The fiber denier is preferably between about 25 to 300, and more preferably between 50 to 200.

### Moldable Polymer

The moldable polymer material 28 for use with the brushes, brush segments, and filaments described herein is preferably an organic binder material that is capable of being molded, i.e., it is capable of deforming under heat to form a desired shape. The moldable polymer may be a thermoplastic polymer, a thermosetting polymer, a thermoplastic elastomer, or combinations thereof. In the case of a thermoplastic polymer, the organic binder is heated above its melting point which causes the polymer to flow. This results in the thermoplastic polymer flowing into the cavities of the mold to form the abrasive brush 10. The abrasive brush is then cooled to solidify the thermoplastic binder. In the case of a thermosetting polymer, during molding the organic binder is in a thermoplastic state, i.e., after it is heated above its melting point it will flow into the cavities of the mold to form the abrasive brush. Next, the abrasive brush is further heated, in some instances at a higher temperature, to cause this organic binder to crosslink and form a thermosetting polymer. Examples of suitable thermosetting polymers include styrene butadiene rubber, polyurethane, ureaformaldehyde, epoxy, and phenolics.

### Thermoplastic Polymers

The abrasive brush according to the present invention may comprise a thermoplastic polymer. Examples of suitable thermoplastic polymers include polycarbonate, polyetherimide, polyester, polyethylene, polysulfone, polystyrene, polybutylene, acrylonitrile-butadiene-styrene block copolymer, polypropylene, acetal polymers, polyurethanes, polyamides, and combinations thereof. In general, preferred thermoplastic polymers of the invention are those having a high melting temperature and good heat resistance properties. Thermoplastic polymers may be preferably employed for low speed applications of abrasive brush 10, in which stress during operation is relatively low. Examples of commercially available thermoplastic polymers suitable for use with the present invention include Grilon™ CR9 copolymer of Nylon 6,12 available from EMS-American Grilon, Inc., Sumter, South Carolina; Profax™ and KS075 polypropylene based thermoplastic available from Himont USA, Inc., Wilmington, Delaware; and Duraflex™ polybutylene based thermoplastic available from Shell Chemical Co., Houston, Texas.

One particular thermoplastic polymer suitable for use with the present invention is a polyamide resin material, which is characterized by having an amide group, i.e., -C(O)NH-. Various types of polyamide resin materials, i.e., nylons, can be used, such as nylon 6/6 or nylon 6. Nylon 6/6 is a condensation product of adipic acid and hexamethylenediamine. Nylon 6/6 has a melting point of about 264°C and a tensile strength of about 770 kg/cm². Nylon 6 is a polymer of ε-caprolactam. Nylon 6 has a melting point of about 220°C and a tensile strength of about 700 kg/cm². Examples of commercially available nylon resins useable as backings in articles according to the present invention include "Vydyne" from Monsanto, St. Louis, Missouri; "Zytel" and "Minion" both from Du Pont, Wilmington, Delaware; "Trogamid T" from Huls America, Inc., Piscataway, New Jersey; "Capron" from Allied Chemical Corp., Morristown, New Jersey; "Nydur" from Mobay, Inc., Pittsburgh, Pennsylvania; and "Ultramid" from BASF Corp., Parsippany, New Jersey

### Thermoplastic Elastomers

In some instances, such as high speed, high stress applications, it is preferred that the moldable polymer is a thermoplastic elastomer or includes a thermoplastic elastomer. Thermoplastic elastomers (or "TPE"s) are defined and reviewed in Thermoplastic Elastomers, A Comprehensive Review, edited by N.R. Legge, G. Holden and H.E. Schroeder, Hanser Publishers, New York, 1987 (referred to herein as "Legge et al."). Thermoplastic elastomers (as used herein) are generally the reaction product of a low equivalent weight polyfunctional monomer and a high equivalent weight polyfunctional monomer, wherein the low equivalent weight polyfunctional monomer has a functionality of at most about 2 and equivalent weight of at most about 300 and is capable on polymerization of forming a hard segment (and, in conjunction with other hard segments, crystalline hard regions or domains) and the high equivalent weight polyfunctional monomer has a functionality of at least about 2 and an equivalent weight of at least about 350 and is capable on polymerization of producing soft, flexible chains connecting the hard regions or domains.

"Thermoplastic elastomers" differ from "thermoplastics" and "elastomers" (a generic term for substances emulating natural rubber in that they stretch under tension, have a high tensile strength, retract rapidly, and substantially recover their original dimensions) in that thermoplastic elastomers, upon heating above the melting temperature of the hard regions, form a homogeneous melt which can be processed by thermoplastic techniques (unlike elastomers), such as injection molding, extrusion, blow molding, and the like. Subsequent cooling leads again to segregation of hard and soft regions resulting in a material having elastomeric properties, however, which does not occur with thermoplastics. Thermoplastic elastomers combine the processability (when molten) of thermoplastic materials with the functional performance and properties of conventional thermosetting rubbers (when in their non-molten state), and which are described in the art as ionomeric, segmented, or segmented ionomeric thermoplastic elastomers. The segmented versions comprise "hard segments" which associate to form crystalline hard domains connected together by "soft", long, flexible polymeric chains. The hard domain has a melting or disassociation temperature above the melting temperature of the soft polymeric chains.

Commercially available thermoplastic elastomers include segmented polyester thermoplastic elastomers, segmented polyurethane thermoplastic elastomers, segmented polyamide thermoplastic elastomers, blends of thermoplastic elastomers and thermoplastic polymers, and ionomeric thermoplastic elastomers.

"Segmented thermoplastic elastomer", as used herein, refers to the sub-class of thermoplastic elastomers which are based on polymers which are the reaction product of a high equivalent weight polyfunctional monomer and a low equivalent weight polyfunctional monomer. Segmented thermoplastic elastomers are preferably the condensation reaction product of a high equivalent weight polyfunctional monomer having an average functionality of at least 2 and an equivalent weight of at least about 350, and a low equivalent weight polyfunctional monomer having an average functionality of at least about 2 and an equivalent weight of less than about 300. The high equivalent weight polyfunctional monomer is capable on polymerization of forming a soft segment, and the low equivalent weight polyfunctional monomer is capable on polymerization of forming a hard segment. Segmented thermoplastic elastomers useful in the present invention include polyester TPEs, polyurethane TPEs, and polyamide TPEs, and silicone elastomer/polyimide block copolymeric TPEs, with the low and high equivalent weight polyfunctional monomers selected appropriately to produce the respective TPE.

The segmented TPEs preferably include "chain extenders", low molecular weight (typically having an equivalent weight less than 300) compounds having from about 2 to 8 active hydrogen functionality, and which are known in the TPE art. Particularly preferred examples include ethylene diamine and 1,4-butanediol.

"Ionomeric thermoplastic elastomers" refers to a sub-class of thermoplastic elastomers based on ionic polymers (ionomers). Ionomeric thermoplastic elastomers are composed of two or more flexible polymeric chains bound together at a plurality of positions by ionic associations or clusters. The ionomers are typically prepared by copolymerization of a functionalized monomer with an olefinic unsaturated monomer, or direct functionalization of a preformed polymer. Carboxyl-functionalized ionomers are obtained by direct copolymerization of acrylic or methacrylic acid with ethylene, styrene and similar comonomers by free-radical copolymerization. The resulting copolymer is generally available as the free acid, which can be neutralized to the degree desired with metal hydroxides, metal acetates, and similar salts. A review of ionomer history and patents concerning same is provided in Legge et al., pp. 231-243.

"Thermoplastic polymer", or "TP" as used herein, has a more limiting definition than the general definition, which is "a material which softens and flows upon application of pressure and heat." It will of course be realized that TPEs meet the general definition of TP, since TPEs will also flow upon application of pressure and heat. It is thus necessary to be more specific in the definition of "thermoplastic" for the purposes of this invention. "Thermoplastic", as used herein, means a material which flows upon application of pressure and heat, but which does not possess the elastic properties of an elastomer when below its melting temperature.

Blends of TPE and TP materials are also within the invention, allowing even greater flexibility in tailoring mechanical properties of the abrasive filaments of the invention.

Commercially available and preferred segmented polyesters include those known under the trade designations "Hytrel™ 4056", "Hytrel™ 5526", "Hytrel™ 5556", "Hytrel™ 6356", "Hytrel™ 7246", and "Hytrel™ 8238" available from E.I. Du Pont de Nemours and Company, Inc., Wilmington, Delaware, with the most preferred including Hytrel™ 5526, Hytrel™ 5556, and Hytrel™ 6356. A similar family of thermoplastic polyesters is available under the tradename "Riteflex" (Hoechst Celanese Corporation). Still further useful polyester TPEs are those known under the trade designations "Ecdel", from Eastman Chemical Products, Inc., Kingsport, Tennessee; "Lomad", from General Electric Company, Pittsfield, Massachusetts; "Arnitel" from DSM Engineered Plastics; and "Bexloy" from Du Pont. Further useful polyester TPEs include those available as "Lubricomp" from LNP Engineering Plastics, Exton, Pennsylvania, and is commercially available incorporating lubricant, glass fiber reinforcement, and carbon fiber reinforcement.

Commercially available and preferred segmented polyamides include those known under the trade designation "Pebax" and "Rilsan", both available from Atochem Inc., Glen Rock, New Jersey.

Commercially available and preferred segmented polyurethanes include those known under the trade designation "Estane", available from B.F. Goodrich, Cleveland, Ohio. Other segmented preferred segmented polyurethanes include those known under the trade designations "Pellethane", and "Isoplast" from The Dow Corning Company, Midland, Michigan, and those known under the trade designation "Morthane", from Morton Chemical Division, Morton Thiokol, Inc.; and those known under the trade designation "Elastollan", from BASF Corporation, Wyandotte, Michigan.

Thermoplastic elastomers are further described in U.S. Patent No. 5,443,906 (Pihl et al.).

### Abrasive Particles

The abrasive particles 26 useful in the brushes, brush segments, and filaments described herein typically have a particle size ranging from about 0.1 to 1500 micrometers, usually between about 1 to 1300 micrometers, and preferably between 50 and 500 micrometers. The abrasive particles may be organic or inorganic. Examples of abrasive particles include fused aluminum oxide, heat treated fused aluminum oxide, ceramic aluminum oxide, heated treated aluminum oxide, silicon carbide, titanium diboride, alumina zirconia, diamond, boron carbide, ceria, cubic boron nitride, garnet, and combinations thereof. Preferred fused aluminum oxide include those available commercially pretreated by Exolon ESK Company, Tonawanda, New York, or Washington Mills Electro Minerals Corp., North Grafton, Massachusetts. Preferred ceramic aluminum oxide abrasive particles are well known in the art and include those described in U.S. Patents Nos. 4,314,827; 4,623,364; 4,744,802; 4,770,671; 4,881,951; 4,964,883; 5,011,508; and 5,164,348. Preferred alpha alumina-based ceramic abrasive particle comprising alpha alumina and rare earth oxide include those commercially available under the designation Cubitron™ 321 from Minnesota Mining and Manufacturing Company, Saint Paul, Minnesota. Other examples of abrasive particles include solid glass spheres, hollow glass spheres, calcium carbonate, polymeric bubbles, silicates, aluminum trihydrate, and mullite. The abrasive particle can be any particulate material (inorganic or organic) that when combined with the binder results in an abrasive brush 10 that can refine a workpiece surface. The selection of the abrasive material will depend in part on the intended application. For example, for stripping paints from a vehicle, it is sometimes preferred to use a relatively soft abrasive particle so as not to damage the surface underneath the paint. Alternatively, for removing burs from metal workpieces, it is preferred to use a harder abrasive particle such as alumina. The abrasive brush of the present invention may include two or more types and/or sizes of abrasive particles.

As used herein, the term abrasive particles also encompasses single abrasive particles which are bonded together to form an abrasive agglomerate. Abrasive agglomerates are well known in the art and are further described in U.S. Patent Nos. 4,311,489; 4,652,275; and 4,799,939. The abrasive particles of this invention may also contain a surface coating. Surface coatings are known to improve the adhesion between the abrasive particle and the binder in the abrasive article. Such surface coatings are well known in the art and are described in U.S. Patent Nos. 5,011,508; 1,910,444; 3,041,156; 5,009,675; 4,997,461; 5,213,591; and 5,042,991. In some instances, the addition of the coating improves the abrading and/or processing characteristics of the abrasive particle.

The plastic abrasive particles useful in the brushes, bush segments, and filaments of the present invention are organic based materials. They are preferably formed from either a thermoplastic polymer and/or a thermosetting polymer. Plastic abrasive particles useful in the present invention may be individual particles or agglomerates of individual particles. The agglomerates may comprise a plurality of the plastic abrasive particles bonded together by a binder to form a shaped mass.

The plastic abrasive particles are preferably present in the thermoplastic matrix at a weight percent (per total weight of thermoplastic matrix and plastic abrasive particles) ranging from about 0.1 to about 80 weight percent, more preferably from about 3 to about 60 weight percent. The weight percentage depends in part on the particular abrading or brush applications.

The size of the plastic abrasive particles incorporated into the thermoplastic matrix depends on the intended use of the brush, brush segment, or filaments. For applications requiring cutting or rough finishing, larger plastic abrasive particles are preferred, while plastic abrasive particles having smaller size are preferred for finishing applications. Preferably, the average diameter of the particles is no more than about 1/2 the diameter of the filament or brush bristle, more preferably no more than about 1/3 of the diameter of the filament or brush bristle.

The plastic abrasive particles will have an average particle size from about 0.01 to about 500 micrometers, typically between about 0.1 to about 250 micrometers, preferably between about 1 to about 150 micrometers, more preferably between about 5 to about 100 micrometers and most preferably between about 5 to about 75 micrometers. The average particle size is typically measured by the longest dimension.

The plastic abrasive particles can have any precise shape or can be irregularly or randomly shaped. Examples of such three dimensional shapes includes: pyramids, cylinders, cones, spheres, blocks, cubes, polygons, and the like. Alternatively, the plastic abrasive particles can be relatively flat and have a cross sectional shape such as a diamond, cross, circle, triangle, rectangle, square, oval, octagon, pentagon, hexagon, polygon and the like.

The surface of the plastic abrasive particles (or a portion of their surface, or the entire surface of a portion of the particles may be treated with coupling agents to enhance adhesion to and/or dispersibility in the molten thermoplastic matrix. The plastic abrasive particles are not required to be uniformly dispersed in the hardened composition, but a uniform dispersion may provide more consistent abrasion characteristics.

The plastic abrasive particles can be formed from a thermoplastic material such as polycarbonate, polyetherimide, polyester, polyvinyl chloride, methacrylate, methylmethacrylate, polyethylene, polysulfone, polystyrene, acrylonitrile-butadiene-styrene block copolymer, polypropylene, acetal polymers, polyurethanes, polyamide, and combinations thereof. In general, preferred thermoplastic polymers of the invention are those having a high melting temperature, e.g. greater than 200°C, more preferably 300°C; or good heat resistance properties. The plastic abrasive particles should have a higher melting or softening point that the thermoplastic matrix, so that the plastic particles are not substantially affected by the filament manufacturing process. The plastic particle should be capable of maintaining a generally particulate state during filament or brush processing, and therefore should be selected so as not to substantially melt or soften during the filament manufacturing process. In one preferred embodiment, the plastic particles are selected to provide greater abrasive properties than the thermoplastic matrix, and both the sheath and core, if present. In this manner, the plastic abrasive particles will perform the desired surface refinement, such as removing foreign material form the workpiece or providing a fine surface finish, while the thermoplastic matrix wears away during operation to continuously present fresh plastic abrasive particles to the workpiece surface.

There are several ways to form a thermoplastic abrasive particle. One such method is to extrude the thermoplastic polymer into elongate segments and then cut these segments into the desired length. Alternatively, the thermoplastic polymer can be molded into the desired shape and particle size. This molding process can be compression molding or injection molding.

The plastic abrasive particles can be formed from a thermosetting polymer. Thermosetting polymers can be formed from: phenolic resins, aminoplast resins, urethane resins, epoxy resins, acrylate resins, acrylated isocyanurate resins, ureaformaldehyde resins, isocyanurate resins, acrylated urethane resins, melamine formaldehyde resins, acrylated epoxy resins and mixtures thereof. Phenolic based abrasive particles are one preferred abrasive particles. There are two types of phenolic resins, resole and novolac. Resole phenolic resins have a molar ratio of formaldehyde to phenol, of greater than or equal to one to one, typically between 1.5:1.0 to 3.0:1.0. Novolac resins have a molar ratio of formaldehyde to phenol, of less than to one to one. Examples of commercially available phenolic resins include those known by the tradenames "Durez" and "Varcum" from Occidental Chemicals Co., Burlington, NJ; "Resinox" from Monsanto; "Aerofene" and "Arotap" from Ashland Chemical Co., Columbus, OH. These phenolic resins are cured to thermosetting polymers. The resulting thermosetting polymers are then crushed to the desired particle size and particle size distribution. In alternative method, the thermosetting plastic abrasive particles can be made in accordance with the teachings of the U.S. Patent No. 5,500,273, "Precisely Shaped Particles and Method of Making Same" (Holmes et al.). The plastic abrasive particle may be a mixture of a thermoplastic polymer and a thermosetting polymer.

A particularly preferred organic abrasive particle is a metal and mold cleaning plastic blast media available commercially as "MC" blast media from Maxi Blast Inc., South Bend, IN, available with an antistatic coating, but preferably untreated. The "MC" media is a 99% melamine formaldehyde cellulosate, an amino thermoset plastic.

The average knoop hardness of the plastic abrasive particle is generally less than about 80 KNH, and preferably less than about 65 KNH.

It is also within the scope of this invention to incorporate inorganic based abrasive particles along with the plastic abrasive particles. These inorganic abrasive particles typically have a particle size ranging from about 0.01 to 500 micrometers, usually between about 1 to 150 micrometers. In certain cases, it is usually preferred that the inorganic abrasive particles are either the same size or smaller than the plastic abrasive particles. It is preferred that the abrasive particles have a Mohs hardness of at least about 7, more preferably above 9. For example, the abrasive filament may comprise between 10 to 90% by weight thermoplastic matrix, between 10 to 90% by weight plastic abrasive particles and between 0 to 49% by weight inorganic abrasive particles.

Abrasive particles 26 are typically from about 0.1 to 75 percent by weight of the particle and polymer mixture, preferably from about 3 to 60 percent, more preferably about 5 to 50 percent, and still more preferably about 20 to 40 percent, although more or less may be used as desired. For some surface refinement applications, it is desirable that brush segment 10 comprises a moldable polymeric material 28 without abrasive particles 26.

### Additives

The moldable polymeric material 28 may further include optional additives, such as, for example, fillers (including grinding aids), fibers, antistatic agents, antioxidants, processing aids, UV stabilizers, flame retardants, lubricants, wetting agents, surfactants, pigments, dyes, coupling agents, plasticizers and suspending agents. The amounts of these materials are selected to provide the properties desired. One preferred method of incorporating certain additives into the moldable polymeric material is to encapsulate the additives into a shell that is able to withstand extrusion or molding temperatures and pressures.

### Lubricants

For some refining applications, it is preferred that the molded polymer 28 include a lubricant. The presence of a lubricant in the moldable polymer 28 reduces the friction of the bristle contacting the workpiece surface. This reduces the heat generated when refining the workpiece. Excessive heat may cause the abrasive brush to leave residue on the workpiece or to otherwise harm the workpiece. Suitable lubricants include lithium stearate, zinc stearate, calcium stearate, aluminum stearate, ethylene bis stearamide, graphite, molybdenum disulfide, polytetraflouroethylene (PTFE), and silicone compounds, for example useful with thermoplastics and thermoplastic elastomers.

An example of a preferred silicone material is a high molecular weight polysiloxane of formula (A): 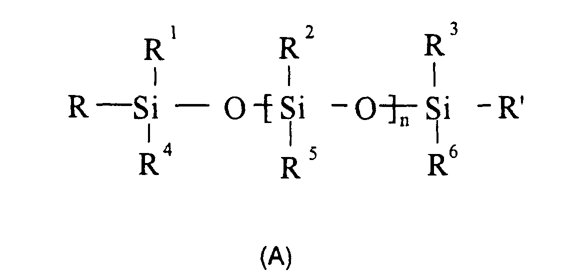 wherein R, R', R¹, R², R³, R⁴, R⁵, and R⁶ may be the same or different and can be an alkyl, vinyl, chloroalkyl, aminoalkyl, epoxy, fluororalkyl, chloro, fluoro, or hydroxy, and n is 500 or greater, preferably 1,000 or greater, more preferably 1,000 to 20,000, and most preferably 1,000 to 15,000.

Another preferred polysiloxane is a polydimethylsiloxane of formula (B): 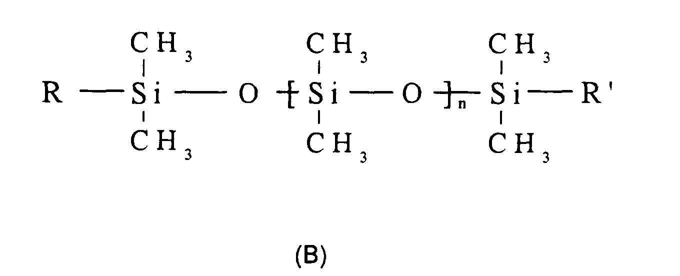 wherein R and R' may be the same or different and can be an alkyl, vinyl, chloroalkyl, aminoalkyl, epoxy, fluororalkyl, chloro, fluoro, or hydroxy, and n is 500 or greater, preferably 1,000 or greater, more preferably 1,000 to 20,000, and most preferably 1,000 to 15,000.

Polysiloxanes are available in many different forms, e.g., as the compound itself or as a concentrate. Example of the polymers into which the polysiloxane can be compounded include polypropylene, polyethylene, polystyrene, polyamides, polyacetal, acrylonitrile-butadiene-styrene (ABS), and polyester elastomer, all of which are commercially available. Silicone modified Hytrel™ is available commercially as BY27-010 (or MB50-010), and silicone modified Nylon 6,6 is available commercially as BY27-005 (or MB50-005), both from Dow Corning Company, Midland, Michigan. Typically, commercially available concentrates may contain a polysiloxane at a weight percent ranging from 40 to 50; however, any weight percent is acceptable for purposes of the invention as long as the desired weight percent in the final product can be achieved. Lubricants preferably can be present in the moldable polymer 26 in amounts of up to about 20 percent by weight (exclusive of abrasive particle content), and preferably in an amount from about 1 to 10 percent, although more or less may be used as desired.

### Coupling Agent

The moldable polymeric material 28 may include a coupling agent to improve the bond between the binder and the abrasive particles as is known in the art. Examples of such coupling agents suitable for this invention include organo silanes, zircoaluminates and titanates. Preferred silane coupling agents, typically amine functional such as gamma-aminopropyltriethoxysilane, are commercially available as A-1100, or -1102 from Union Carbide Corporation, New York, New York. The abrasive particles 26 may be pretreated with a coupling agent prior to being with the moldable polymer. Alternatively, the coupling agent may be added directly to the moldable polymer 28.

### Fillers

The moldable polymeric material 28 may include a filler as is known in the art. Examples of useful fillers for this invention include: metal carbonates (such as calcium carbonate (chalk, calcite, marl, travertine, marble and limestone), calcium magnesium carbonate, sodium carbonate, magnesium carbonate), silica (such as quartz, glass beads, glass bubbles and glass fibers) silicates (such as talc, clays, (montmorillonite) feldspar, mica, calcium silicate, calcium metasilicate, sodium aluminosilicate, sodium silicate) metal sulfates (such as calcium sulfate, barium sulfate, sodium sulfate, aluminum sodium sulfate, aluminum sulfate), gypsum, vermiculite, wood flour, aluminum trihydrate, carbon black, metal oxides (such as calcium oxide (lime), aluminum oxide, titanium dioxide) and metal sulfites (such as calcium sulfite). In some instances, the filler may serve as an abrasive particle.

### Grinding Aids

The polymeric material may include a grinding aid. A grinding aid is defined herein as particulate material that the addition of which has a significant effect on the chemical and physical processes of abrading which results in improved performance. In particular, it is believed in the art that the grinding aid will either 1) decrease the friction between the abrasive particles and the workpiece being abraded, 2) prevent the abrasive particle from "capping", i.e. prevent metal particles from becoming welded to the tops of the abrasive particles, 3) decrease the interface temperature between the abrasive particles the workpiece, or 4) decreases the grinding forces. Examples of chemical groups of grinding aids include waxes, organic halide compounds, halide salts and metals and their alloys. The organic halide compounds will typically break down during abrading and release a halogen acid or a gaseous halide compound. Examples of such materials include chlorinated waxes like tetrachloronaphthalene, pentachloronaphthalene; and polyvinyl chloride. Examples of halide salts include sodium chloride, potassium cryolite, sodium cryolite, ammonium cryolite, potassium tetrafluoroborate, sodium tetrafluoroborate, silicon fluorides, potassium chloride, magnesium chloride. Examples of metals include, tin, lead, bismuth, cobalt, antimony, cadmium, iron, and titanium. Other miscellaneous grinding aids include sulfur, organic sulfur compounds, graphite and metallic sulfides.

### Injection Molding

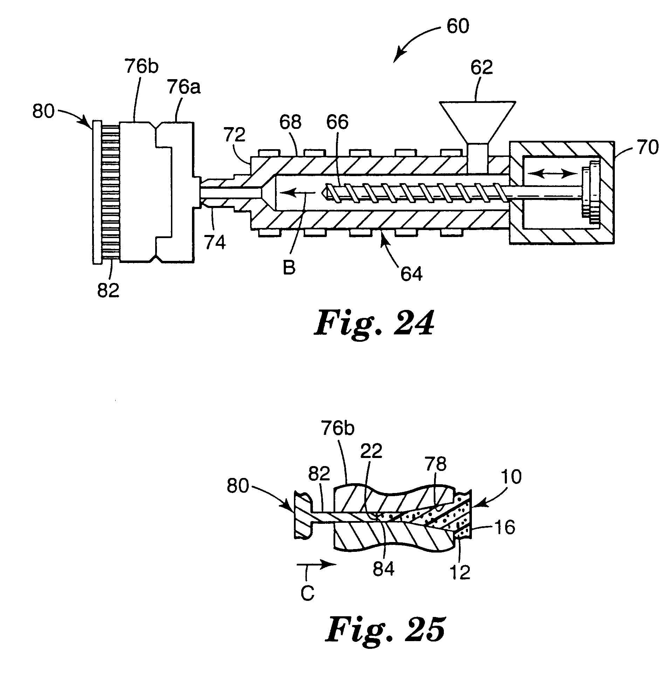

The abrasive brush or brush segment 10, 110 of the present invention is preferably injection molded. Injection molding techniques are known in the art. Injection molding apparatus 60 for making the abrasive brush 10 according to the method of the present invention is illustrated in Figure 24. After preferably being dried by heating, a mixture of pellets comprising moldable polymer 28 and, optionally, abrasive particles 26 is placed in a hopper 62. The hopper feeds the mixture into a first or rear side 70 of a screw injector 64 generally comprising a screw 66 within a barrel 68. The opposite side, or front side 72 of the screw injector 64 comprises a nozzle 74 for passing the softened mixture into a mold 76a, 76b. The barrel 68 of the injector 64 is heated to melt the mixture, and the rotating screw 66 propels the mixture in the direction of the nozzle 74. The screw 66 is then moved linearly frontward in direction B to impart the "shot" of the softened mixture into the mold 76a, 76b at the desired pressure. A gap is generally maintained between the forward end of the screw and the nozzle to provide a "cushion" area of softened material which is not injected into the mold.

The mold will contain cavities which are the inverse of the desired abrasive brush configuration. Thus, for molded brush 10, 110, the mold design must take into account the abrasive brush configuration including the size and configuration of the base 12, the bristles 18, and the optional attachment means 30. For molded brush or segment 10 as illustrated in Figures 12-13, the mold 76a, 76b illustrated in Figure 27 will contain cavities which are the inverse of the desired brush segment configuration. Thus the mold design must take into account the brush segment configuration including the size and configuration of center portion 12, bristles 18, and optional attachment means such as holes 19, root 30, keyway 36, or threaded stud 38. As seen in Figure 28, mold portion 76a includes cavities 78 for forming bristles 18. The mold embodiment illustrated in Figure 28 is configured to mold the bristle embodiment illustrated in Figure 18c. Alternatively, mold portions 76c and 76d illustrated in Figure 29 can be used to form a double row of staggered bristles 18. Such a bristle arrangement is illustrated in Figure 30.

The above mentioned pellets can be preferably prepared as follows. The moldable polymer 28 can be heated above its melting point and the abrasive particles 26 can then be mixed in. The resulting mixture is then formed into continuous strands and the strands are cooled to solidify the moldable polymer for pelletizing on suitable equipment as is known in the art. Likewise, lubricants and/or other additives to the polymeric material 28 can be included in the formation of the pellets. The pellets comprising the moldable polymer 28, abrasive particles 26, and any desired lubricant or other additive are then placed into the hopper 62 to be fed into the screw extruder 64 as described above. Alternatively, it is possible to mix the abrasive particles 26 with pellet form of the moldable polymer 28 and load this in the hopper. Likewise, lubricants and/or other additives to the polymeric material 28 can be mixed in prior to being loaded into the hopper.

The conditions under which the abrasive brush is injection molded are determined by the injection molder employed, the configuration of the brush 10, and the composition of the moldable polymer 28 and abrasive particles 26. In one preferred method, the moldable polymer 28 is first heated to between 80 to 120°C, preferably 90 to 110°C for drying, and is placed in the hopper 62 to be gravity fed into the screw feed zone. The barrel temperature of the screw injector is preferably from about 200 to 250°C, more preferably from about 220 to 245°C. The temperature of the mold is preferably from about 50 to 150°C, more preferably from about 100 to 140°C. The cycle time (the time from introducing the mixture into the screw extruder to opening the mold to remove the molded abrasive brush) will preferably range between 0.5 to 180 seconds, more preferably from about 5 to 60 seconds. The injection pressure will preferably range from about 690 to 6,900 kPa (100 to 1000 psi), more preferably from about 2070 to 4830 kPa (300 to 700 psi).

The injection mold cycle will depend upon the material composition and the abrasive brush configuration. In one preferred embodiment, the moldable polymer and abrasive particles are generally homogenous throughout the abrasive brush 10. In such an embodiment, there will be a single insertion or shot of mixture of the polymeric material 28 and abrasive particle 26 to mold the brush 10, including the base 12, bristles 18, and attachment means 30 if present. Alternatively, the bristles 18 may contain abrasive particles 26, but the base 12 does not. In such an embodiment, there will be two insertions or shots of material. The first insertion will contain a mixture of moldable polymer 28 and abrasive particles 26 to primarily fill the bristle portion of the mold. The second insertion will contain moldable polymer (which may be the same or different from the moldable polymer of the first insertion) without abrasive particles to primarily fill the base and attachment means portions of the mold. Likewise, the base 12 and bristles 18 may contain abrasive particles, but the attachment means 30 may not. In this construction there will be two insertions or shot of material. The first insertion will contain a mixture of moldable polymer 28 and abrasive particles 26 to fill the bristle and base portions of the mold. The second insertion will contain only a moldable polymer (which may be the same or different from the moldable polymer of the first insertion) to primarily fill the attachment means portion of the mold. It is also possible to use more than one shot to vary the color of different portions of the brush if desired. It is also possible to employ three or more shots, for example one each for the bristles, base, and attachment means. After injection molding, the mold is cooled to solidify the moldable polymer. The mold halves are then separated to allow removal of molded abrasive brush 10.

For molded brush illustrated in Figures 1-2, or Figures 8-11, it is preferable that an ejector assembly 80 is provided on the opposite side of mold 76a, 76b from the injection port to eject the solidified abrasive brush 10 from the mold. As seen in Figure 25, ejector pins 82 are preferably located in each mold cavity 78 which corresponds to a bristle 18. After the abrasive brush 10 is sufficiently cooled and mold portion 76a has been removed, tips 84 of ejector pins 82 are forced to move against the tip 22 of the bristle in direction C towards the base 12, to thereby eject the bristles 18 from their respective cavities. In one preferred embodiment, the location of the tips 84 of ejector pins 82 within the cavity is variable, thereby varying the depth of the mold cavity 78 allowing for longer or shorter bristles 18 to be molded. This can be done by varying the position of ejector 80 relative to mold portion 76b, or by varying the length of the ejector pins 82 on the ejector 80.

### Method of Refining a Surface

As discussed above, the molded abrasive brush 10 according to the present invention is used to refine a surface by: removing a portion of a workpiece surface; imparting a surface finish to a workpiece; cleaning a workpiece surface, including removing paint or other coatings, gasket material, corrosion, or other foreign material; or some combination of the foregoing. The abrasive brush 10 of Figures 1-2 is fastened by the attachment means to a suitable power rotary tool, and is particularly well adapted for use with right angle power tools as are known in the art. One suitable power tool for use the molded abrasive brush according to the present invention is the Ingersoll-Rand cyclone series right angle grinder, model TA 180 RG4, rated at 18,000 rpm and 0.70 hp. The molded abrasive brush 10 may mounted by itself on the rotary power tool, or may employ a back-up pad behind the abrasive brush 10 as is known in the art. One suitable back-up pad arrangement is that disclosed in to U.S. Patent No. 3,562,968 (Johnson et al.).

As discussed above, molded brush segment 10 and brush assembly 100 as shown in Figures 12-23 are used to refine a surface by: removing a portion of a workpiece surface; imparting a surface finish to a workpiece; cleaning a workpiece surface, including removing paint or other coatings, gasket material, corrosion, or other foreign material; or some combination of the foregoing. In one preferred embodiment illustrated in Figure 14b, brush assembly 100 comprises a plurality of brush segments 10 fastened by the attachment means to a shaft 101 and a suitable drive means. Alternatively, the brush segment of Figure 22 can be mounted to a suitable rotary drive means. Surface refining can be dry or wet, as with water, lubricant, rust inhibitor, or other suitable liquids as is well known in the art. The brush assembly 100 or segment 10 can be rotated at any suitable speed, preferably in the range of about 100 to 15,000 RPM, although higher or lower speeds can be used as desired. Surface refinement can be performed with any suitable force on the brush assembly or segment, typically from about 0.5 to 100 kg. It should be noted that the bristles 18 are sufficiently flexible and supple that, under many refining operations, contact of the bristle against the workpiece is along a substantial length of the side of the bristle, not merely a small portion of the bristle immediately adjacent the tip 18. By using organic abrasive particles described herein, the abrasive brush can be used to remove a foreign material, for example paint, dirt, debris, oil, oxide coating, rust, adhesive, gasket material and the like, from a workpiece surface without removing a significant amount of material from the workpiece itself.

### Abrasive Filament

As previously described, the present invention also presents an abrasive filament comprising a thermoplastic matrix having plastic abrasive particles dispersed therein. It is preferred that the abrasive filament have an aspect ratio of at least 1, preferably at least five, more preferably at least 10 and most preferably at least 20. The aspect ratio is defined as the length divided by the arithmetic average width. The filaments can be of any length or width desired, and the cross-sectional shape can of course be round, oval, square, triangular, rectangular, polygonal, or multilobal (such as trilobal, tetralobal, and the like) in cross-section. Additionally, the abrasive filaments may have a variable cross sectional area. For example, the filaments can be "wavy" or textured. Likewise, the filaments can be tapered.

There are four major types of abrasive filaments. In the first type, the plastic abrasive particles are interspersed nearly uniformly and preferably uniformly throughout the thermoplastic matrix. This first type results in a substantially homogeneous abrasive filament. In the second, third, and fourth types, the abrasive filament comprises a sheath and a core, wherein the sheath and core are preferably made from different materials. Such filaments are known in the art and are disclosed in U.S. Patent No. 5,427,595, "Abrasive Filaments Comprising Abrasive-Filled Thermoplastic Elastomer, Method of Making Same, Articles Incorporating Same and Methods of Using Said Articles," (Pihl et al.); and in U.S. Patent No. 5,460,883, "Composite Abrasive Filaments, Methods of Making Same, Articles Incorporating Same, and Methods of Using Said Articles," (Barber, Jr., et al). In the second type, the sheath comprises the thermoplastic matrix having plastic abrasive particles interspersed throughout at least a portion thereof. The core can comprise either a second thermoplastic matrix coextruded with the sheath as taught by Pihl et al., or a preformed core with a hardened sheath coated over it as taught by Barber et al. In the third type, the sheath comprises a second thermoplastic matrix and the core comprises the thermoplastic matrix having plastic abrasive particles interspersed throughout at least a portion thereof. In the fourth type, the sheath and core both comprise a thermoplastic matrix having plastic abrasive particles interspersed throughout at least a portion thereof. In the fourth embodiment, either the thermoplastic matrix and/or the plastic abrasive particles are preferably different between the sheath and core.

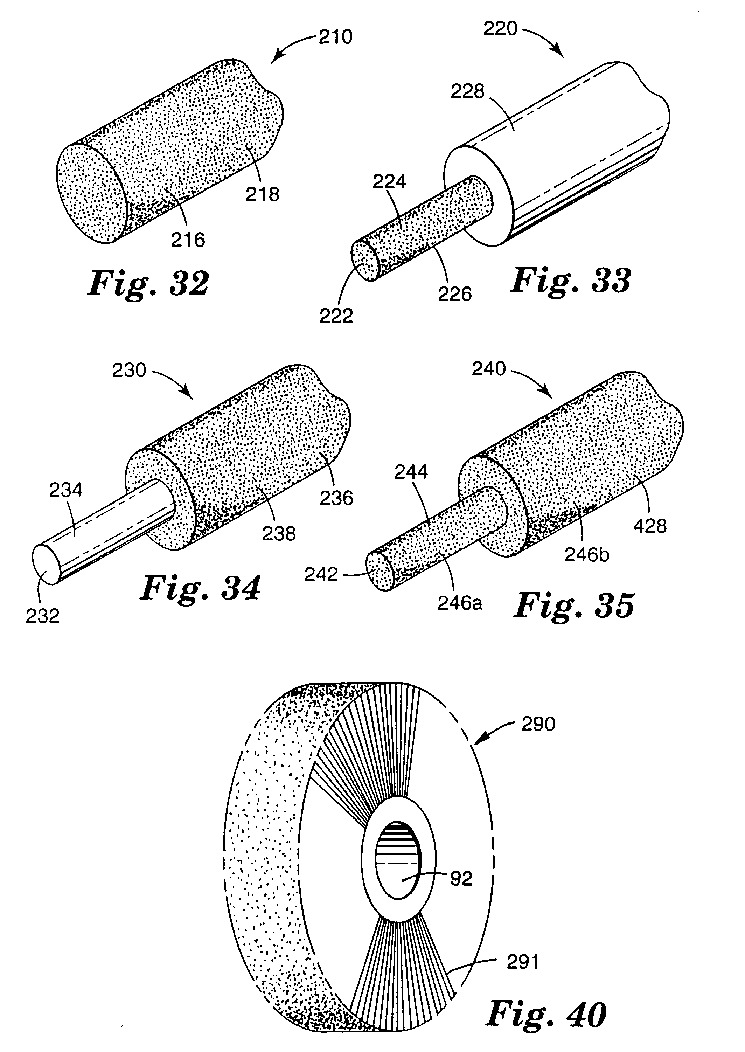

Figure 32 shows an enlarged perspective view of filament 210, comprising thermoplastic matrix 216 having plastic abrasive particles 218 interspersed throughout.

Three coextruded core-sheath embodiments 220, 230, and 240 of abrasive filaments in accordance with the present invention are illustrated in enlarged perspective views in Figures 33-35, where in each embodiment it will be appreciated that a portion of the sheath has been removed to show the respective cores. It will also be appreciated that the core or sheath (or both) containing the abrasive particles may have only a section or portion of the core or sheath so filled. In the embodiments illustrated in Figures 33-35, either or both of the core and sheath can comprise a thermoplastic elastomer or a thermoplastic, or blends thereof.

Referring now to Figure 33, an abrasive filament 220 has a first elongate filament component in the form of core 222, including a thermoplastic matrix 224 and plastic abrasive particles 226. Abrasive filament 220 also has a second elongate filament component in the form of sheath 228 coextruded with core 222. The thermoplastic matrix 224 of the elongate filament component core 222 has interspersed throughout and adhered therein a plurality of plastic abrasive particles 226.

Figure 34 illustrates an alternate abrasive filament embodiment 230, wherein the first elongate filament component is in the form of a core 232 and the coextruded sheath is formed from thermoplastic matrix 238 which has interspersed throughout and adhered within a plurality of abrasive particles 236. In this embodiment, only the sheath includes abrasive particles.

Figure 35 illustrates another core-sheath abrasive filament embodiment 240 having a first filament component in the form of core 242 comprising first thermoplastic matrix 244 and a second filament component in the form of a coextruded sheath comprising a second thermoplastic matrix 248, and wherein both core and sheath include abrasive particles 246a and 246b, respectively. Abrasive particles 246a and 246b may of course be the same or different in terms of type, particle size, particle size distribution, and distribution within the core and sheath. At least one of abrasive particles 246a and 246b comprises plastic particles in accordance with the present invention. It is within the scope of the present invention that the core and sheath each comprise abrasive particles, where the abrasive particles can be the same or different between the core and sheath. Alternatively, one of the core and sheath can comprise inorganic abrasive grains and the other of the core and sheath can comprise plastic abrasive particles.

The abrasive filaments as shown schematically in Figures 33-35 may have core and total abrasive filament diameters within a broad range, limited only by the size of the apparatus used produce the molten thermoplastic matrix, and the article to which the abrasive filaments are to be attached. Obviously, as the diameter of the abrasive filament increases, the number of abrasive filaments which can be attached to a substrate, such as a hub of a given size, decreases. Core diameters, for abrasive filaments of the present invention which are core-sheath structures, for abrasive filaments used in typical hand-held tools, are preferably at least about 0.1 mm, while the abrasive filaments themselves preferably have a diameter ranging from about 1.0 mm to about 2.0 mm. These dimensions could, of course, increase tremendously for a large abrading device, and abrasive filaments having much larger core and total diameters are considered within the scope of the appended claims

Four embodiments 250, 260, 270, and 280 of composite abrasive filaments in accordance with the present invention are illustrated in enlarged perspective views in Figures 36-39, where in each embodiment it will be appreciated that a portion of the sheath comprising the thermoplastic matrix and plastic abrasive particles has been removed to show the preformed cores.

Figure 36 shows an enlarged perspective view of composite abrasive filament 250, having a preformed core 252 covered by a hardened sheath coating of thermoplastic matrix 254 and plastic abrasive particles 258. Preformed core 252 in this embodiment is a 1 x 7 stranded preformed core, formed for example from seven individual stainless steel wires 256. The thermoplastic matrix of the sheath has interspersed throughout and adhered therein a plurality of plastic abrasive particles 258.

Figure 37 shows an alternate composite abrasive filament embodiment 260, wherein the preformed core 262 is formed from a plurality of parallel, continuous metallic wires or non-metallic monofilaments 266, while Figure 38 shows a second alternate embodiment 270, wherein the preformed core 272 is a cable having a 3 x 7 arrangement of three strands 276, the strands in turn being each 1 x 7 strands of seven individual metallic wires or non-metallic monofilaments as in Figure 36. The composite abrasive filaments 260 and 270 each have a hardened sheath coating of thermoplastic matrix 264, 274 having plastic abrasive particles 268, 278 interspersed throughout and adhered therein covering preformed cores 262 and 272, respectively. Regarding the embodiment shown in Figure 37, it should be noted that the sheath coating can be between the parallel monofilaments of the preformed core, so that the individual monofilaments may be equally or unequally spaced apart.

Figure 39 shows an enlarged perspective view of another composite abrasive filament embodiment 280 in accordance with the present invention. Preformed core 282 in this embodiment is a single continuous wire or monofilament of, for example, stainless steel or glass fiber. As with previous embodiments, core 282 has thereon a hardened sheath coating of thermoplastic matrix 284 having interspersed throughout and adhered therein a plurality of plastic abrasive particles 288.

The composite abrasive filaments as shown schematically in Figures 36-39 may have preformed core and total composite abrasive filament diameters within a broad range, limited only by the size of the apparatus used to coat the preformed core with the sheath coating of thermoplastic matrix, and the article to which the composite abrasive filaments are to be attached. Obviously, as the preformed core diameter of the composite abrasive filament increases, the number of composite abrasive filaments which can be attached to a substrate, such as a hub of a given size, decreases. Preformed core diameters for composite abrasive filaments of the present invention used on typical hand-held tools are preferably at least about 0.1 mm, while the composite abrasive filaments themselves preferably have a diameter ranging from about 1.0 mm to about 2.0 mm. These dimensions could, of course, increase tremendously for a large abrading device, and composite abrasive filaments having much larger preformed core and total diameters are considered within the scope of the appended claims.

### Preformed Cores

Preformed core materials useful in the present invention can be envisioned as an abrasive coating substrate that can be selected or modified in its surface characteristics, mechanical properties, and environmental stability properties. The preformed core material is preferably selected or capable of being modified so that its surface has the ability to achieve adhesion between the core and thermoplastic matrix coating. Important mechanical properties include tensile strength and flex fatigue resistance while operating under various chemical, thermal and atmospheric conditions.

Preformed cores useful in the filaments of the present invention include: metal wires such as stainless steel, copper, and the like; inorganic fibers such as glass and ceramic fibers; synthetic fibers, such as aramid, rayon, and the like; natural fibers such as cotton, and mixtures of these. Although continuous monofilaments may be used, preferred are stranded, cable, and yarn versions of these materials. "Stranded" as used herein refers to twisted together wires while "yarn" refers to twisted together non-metallic monofilaments. Typical arrangements include 1 x 3, 1 x 7, and 3 x 7 arrangements, wherein the first number refers to the number of strands or yarns and the second number refers to the number of individual monofilaments or wires twisted together in each yarn or strand. "Cable" refers to two or more strands twisted together, while "plied yarns" refers to two or more yarns twisted together, preferably having the opposite direction of twist compared with the cables (for example, if the cables are twisted together "right handed" the plied yarn may be twisted together "left handed"). Alternatively, the performed core may be in the form of untwisted continuous wires or monofilaments. Preferred yarns include yarns of glass fibers, ceramic fibers, aramid fibers, polyamide fibers, polyethylene terephthalate fibers, cotton fibers, plied version thereof, and mixtures thereof.

The diameter of the preformed core is preferably at least about 0.01 mm, more preferably ranging from about 0.1 mm to about 0.7 mm, although there is actually no upper limit to the diameter other than that imposed by currently known methods of making filaments.

Some commercially available preformed core materials useful in the present invention include a 1 x 7 stranded stainless steel of 0.305 mm outside diameter (OD) available from National Standard, Specialty Wire Division, Niles, MI; a continuous glass filament yarn having about 204 monofilaments, known under the order number "ECH 18 1/0 0.5Z 603-0", referred to herein as "OCF H-18", and a similar glass filament yarn having an epoxy silane pretreatment and known under the order number "ECG 75 1/2 2.8 S 603-0" referred to herein as "OCF-G75", both available from Owens-Corning Fiberglass Corporation, Toledo, OH; yarns of aramid fibers known under the trade designation "Kevlar" (200-3000 denier, zero twist, type 964) manufactured and sold by Du Pont; and the plied yarns made of aramid, polyamide, and polyester fibers having textile designations #69, #92, and #138 (the numbers referring to the weight of the plied yarn), available from Eddington Thread Manufacturing Company, Bensalem, PA.

In some preferred embodiments the preformed core will be treated with a pretreatment chemical such as an adhesive or sealant, which serves to adhere the thermoplastic matrix to the preformed core. One group of pretreatment chemicals useful when the preformed core is glass plied yarn is silane coupling agents such as epoxy silanes.

The sheath component of the sheath/core filament embodiment preferably covers the entire coextruded or preformed core, although this is not a requirement. The sheath could conceivably cover only that side of the core which strikes the workpiece, and filaments of this construction are considered within the scope of the invention. As would be obvious to skilled artisans, the sheath need not have the same outer configuration as the core; for example, the sheath could have a rectangular or triangular cross-section while the core is roughly circular in cross-section. When the sheath completely coats the core, as in the preferred filament constructions discussed above, the ratio of cross-sectional area of the sheath to the cross-sectional area of the core may vary within a broad range, from about 0.5:1 to about 100:1. More preferably, the ratio of cross-sectional areas ranges from about 1:1 to about 10:1, particularly preferably about 1:1 to about 3:1.

### Thermoplastic Matrix

The term "thermoplastic matrix" means that the material is capable of being heated to a molten state and then subsequently cooled to a solid state. The thermoplastic matrix can be any thermoplastic polymer or thermoplastic elastomer. It is also within the scope of this invention to use blends of different thermoplastic polymers, thermoplastic elastomers, or blends of thermoplastic polymers with thermoplastic elastomers.

### Thermoplastic Elastomers

In one aspect of this invention, the thermoplastic matrix may be a thermoplastic elastomer. Thermoplastic elastomers include those described in U.S. Patent Nos. 5,427,595 and 5,460,883, and those described above with reference to the various embodiments of abrasive brushes and segments 10, 110.

The mechanical properties of segmented thermoplastic elastomers (such as tensile strength and elongation at break) are dependent upon several factors. The proportion of the hard segments in the polymers which form the elastomers, their chemical composition, their molecular weight distribution, the method of preparation, and the thermal history of the elastomer all affect the degree of hard domain formation. Increasing the proportion of the low equivalent weight polyfunctional monomer tends to increase the hardness and the modulus of the resultant elastomer while decreasing the ultimate elongation.

The upper use temperature of segmented elastomers is dependent upon the softening or melting point of the low equivalent weight polyfunctional monomer comprising the hard segments. For long term aging, the stability of the high equivalent weight polyfunctional monomer comprising the soft segment is also important. At elevated temperatures and with a lower percentage of hard segments which can contribute to hard domains, bending modulus and tensile strength of the elastomers are generally reduced. As may be apparent to those skilled in the plastics processing art, to extend the upper useful temperature of a segmented elastomers, it is necessary to introduce low equivalent weight polyfunctional monomers adapted to form hard domains which soften or melt at higher temperatures. However, although increasing the amount of or equivalent weight of low equivalent weight polyfunctional monomers can lead to elastomer hardness, reduced elastic properties and reduced flex fatigue resistance of the filaments made therefrom may result.

As mentioned previously, blends of thermoplastic elastomers and other polymers have also proven useful, such as the polyurethane/acrylonitrile-butadienestyrene blends known under the trade designation "Prevail", grades 3050, 3100, and 3150, all from Dow Chemical.

Block copolymers regarded by those skilled in the plastics processing art as thermoplastic elastomers, including the elastomeric copolymers of silicones and polyimides, may also prove useful in filaments of the invention. Commercially available elastomeric copolymers of thermoplastic silicones and polyimides include those known under the trade designation "Siltem STM-1500", from GE Silicones, Waterford, NY. These copolymers have a tensile strength of about 25 MPa, elongation of 105%, and flexural modulus of about 415 MPa.

Ionomers which may behave as ionomeric thermoplastic elastomers and thus useful in the present invention, such as those ionomers known under the trade designation "SURLYN", are preferably prepared by copolymerization of a functionalized monomer and an olefinic unsaturated monomer, or by direct functionalization of a preformed polymer, as previously noted. The large quantity of commercial quality ethylene/methacrylic acid copolymers, for example containing between about 5 and about 20 weight percent methacrylic acid component, makes these ionomers particularly useful in the present invention.

### Thermoplastic Polymers

Examples of thermoplastic polymers suitable for this invention include any of those described above with reference to the various embodiments of abrasive brushes and segments 10, 110.

### Additives

Any of the additives described above with respect to the various embodiments of abrasive brushes and segments 10, 110 can be used with filaments 210, 220, 230, 240, 250, 260, 270, and 280. This includes the lubricants, coupling agents, fillers, and grinding aids described above.

### Toughening Material

The filament may further contain a toughening material. Examples of such toughening materials include rubber type polymers and plasticizers. Specific examples of toughening materials include toluene sulfonamide derivatives, styrene butadiene copolymers polyether backbone polyamide (commercially available from Atochem, under the trade designation "Pebax"), rubber grafted onto polyamide (commercially available from Du Pont under the trade designation "Zytel FN") and a triblock polymer of styrene-(ethylene butylene)-styrene (commercially available from Shell Chemical Co., under the trade designation "Kraton 1901X").

### Articles

Plastic abrasive particle filaments of the invention may be incorporated into a wide variety of brushes, either assembled to form an open, lofty abrasive pad, or attached to various substrates. Figure 40 shows one embodiment of a wheel brush 290 within the invention having a plurality of filaments 291 glued or otherwise attached to a hub 292.

The filaments of the invention can be incorporated into brushes of many types and for myriad uses, such as cleaning, deburring, radiusing, imparting decorative finishes onto metal, plastic, and glass substrates, and like uses. Brush types include wheel brushes, cylinder brushes (such as printed circuit cleaning brushes), mini-grinder brushes, floor scrubbing brushes, cup brushes, end brushes, flared cup end brushes, circular flared end cup brushes, coated cup and variable trim end brushes, encapsulated end brushes, pilot bonding brushes, tube brushes of various shapes, coil spring brushes, flue cleaning brushes, chimney and duct brushes, and the like. The filaments in any one brush can of course be the same or different. A nonlimiting list of exemplary brushes in which the plastic particle filled filaments can be used include brushes such as described in U.S. Pat. Nos. 5,016,311, 5,083,840, and 5,233,719 (Young et al.), and 5,400,458 (Rambosek).

In general, one such brush construction consists of a base layer, a binder layer and the bristles. The bristles are individually and uniformly embedded in the binder such that they project upward and are generally parallel to one another. The base layer and the binder layer can be the same material or different material and in general these layers are polymeric materials. For example the base layer can be a flexible resilient polymeric open cell foam, a polyester material or a polyamide material. In addition, a cotton, polyamide or polyester fabric can be impregnated into these polymeric materials. The binder layer is usually a semi-rigid polymeric material such as a polyurethane, polyester, epoxy or polyamide. In the case where the base and the binder layer are the same, it is preferable to use a polyurethane material. In general the thickness of the base and binder layers can range between 1 to 10 millimeters, preferably 2 to 5 millimeters. The larger the diameter of the bristles, obviously the thicker the binder layer is.

This brush construction can comprise only the abrasive filaments of the invention. Alternatively, the brush construction can comprise a mixture of the abrasive filaments of the invention and conventional filaments. Such conventional filaments include those without abrasive particles, and those including conventional inorganic abrasive particles.

The conventional filaments can be selected from the group consisting of: polyamide, polypropylene, polyester, polyethylene, and metallic fiber. In some cases the filaments can be hollow, which is well known in the brush art. In addition the polymeric filaments may contain abrasive particles such as those well known in the art like silicon carbide and aluminum oxide. The particle size of these abrasive particles will vary depending upon the application, but in general they will range from 10 to 600 micrometers, preferably 15 to 120 micrometers. If the filament contains the abrasive particles, the brush construction material will typically produce a matte type finish on the workpiece. If the filament does not contain abrasive particles, a glossy type finish will typically be produced on the workpiece.

The diameter of the filaments can range from 0.01 to 100 mm, typically 0.05 mm to 50 mm, preferably 0.1 mm to 25 mm, more preferably 0.2 mm to 10 mm and most preferably 0.25 mm to 5 mm. The length of the filament, or trim length, can range from 1 to 1000 millimeters, typically 2 to 100 mm, preferably 3 to 75 mm, more preferably 4 to 50 mm and most preferably 5 to 50 mm.

In some applications the filaments will be nearly perpendicular to the binder layer, in other applications such as conveyor systems, the filaments will be placed at a specified angle or a specified tilt.

Bristles or filaments of the present invention can be used in other non-abrasive applications, such as for example, car wash brushes, street cleaners, snow blowers, and turf vacuums.

Another embodiment is to provide a bristle having plastic abrasive particles and encapsulated materials therein. Examples of encapsulated materials can include soaps, lubricants, anti-rust agents, and anti-static agents. In a particular embodiment, phosphoric acid (or a similar material) can be added to a bristle comprising plastic abrasive particles. A brush made with such bristles would be useful in the removal and/or neutralization of surface rust on articles such as, for example, automobiles, benches, and swingsets.

### Workpiece

The workpiece can be any type of material such as metal, metal alloys, exotic metal alloys, ceramics, glass, wood, wood like materials, composites, painted surface, plastics, reinforced plastic, stones, and combinations thereof. The workpiece may also contain an unwanted layer or coating external over the workpiece surface. This coating may be for example paint, dirt, debris, oil, oxide coating, rust, adhesive, gasket material and the like. The workpiece may be flat or may have a shape or contour associated with it. Examples of workpieces include glass eye glasses, plastic eye glasses, plastic lenses, glass television screens, metal automotive components, plastic components, particle board, cam shafts, crank shafts, kitchen sinks, bath tubs, furniture, turbine blades, painted automotive components, magnetic media, and the like.

Depending upon the application, the force at the abrading interface can range from about 0.1 kg to over 100 kg. Generally this range is between 1 kg to 50 kg of force at the abrading interface. Also depending upon the application, there may be a liquid present during abrading. This liquid can be water and/or an organic compound. Examples of typical organic compounds include lubricants, oils, emulsified organic compounds, cutting fluids, soaps, or the like. These liquids may also contain other additives such as defoamers, degreasers, corrosion inhibitors, or the like. The abrasive article may oscillate at the abrading interface during use. In some instances, this oscillation may result in a finer surface on the workpiece being abraded.

The brush article of the invention can be used by hand or used in combination with a machine to refine a surface by: cleaning a workpiece surface, including removing paint or other coatings, gasket material, corrosion, or other foreign material. At least one or both of the brush and the workpiece is moved relative to the other. The abrasive article or brush can be converted into a belt, tape rolls, disc, sheet, and the like. Typically brush discs are secured to a back-up pad by an attachment means. These brush discs can rotate between 100 to 20,000 revolutions per minute, typically between 1,000 to 15,000 revolutions per minute.

### Method of Making Composite Plastic Particle Filaments

In general, a method of making an abrasive filament of the present invention includes the steps of:
(a) rendering a thermoplastic matrix molten and combining plastic abrasive particles therewith;
(b) extruding the molten thermoplastic matrix and plastic abrasive particles; and
(c) cooling the coating to a temperature sufficient to harden the molten thermoplastic matrix and thus form a hardened composition comprising a thermoplastic matrix having plastic abrasive particles interspersed throughout.

A first variation of this method comprises the steps of:
(a) rendering a first thermoplastic matrix molten and combining plastic abrasive particles therewith;
(b) providing a second thermoplastic matrix molten;
(c) coextruding the first thermoplastic matrix and plastic abrasive particles and the second thermoplastic matrix, such that the first thermoplastic matrix and the plastic abrasive particles form a core and the second thermoplastic matrix forms a coating that substantially covers the core;
(d) cooling to a temperature sufficient to harden the molten first and second thermoplastic matrix and thus form an abrasive filament having the core comprising the second thermoplastic matrix and a sheath comprising a first thermoplastic matrix having plastic abrasive particles distributed throughout, wherein the sheath is substantially present over the core.

A second variation of this method comprises the steps of:
(a) rendering a first thermoplastic matrix molten;
(b) rendering a second thermoplastic matrix molten and combining plastic abrasive particles therewith;
(c) coextruding the first thermoplastic matrix and the second thermoplastic matrix and plastic abrasive particles, such that the first thermoplastic matrix forms a core and the second thermoplastic matrix and the plastic abrasive particles form a coating that substantially covers the core;
(d) cooling to a temperature sufficient to harden the molten first and second thermoplastic matrix and thus form an abrasive filament having a core comprising the first thermoplastic matrix, and a sheath comprising the second thermoplastic matrix and the plastic abrasive particles, wherein the sheath is substantially present over the core.

A third variation of this method comprises the steps of:
(a) rendering a first thermoplastic matrix molten and combining first plastic abrasive particles therewith;
(b) providing a second thermoplastic matrix molten and combining second plastic abrasive particles therewith;
(c) coextruding the first thermoplastic matrix and first plastic abrasive particles and the second thermoplastic matrix and second plastic abrasive particles, such that the first thermoplastic matrix and the first plastic abrasive particles form a core and the second thermoplastic matrix and second plastic abrasive particles form a coating that substantially covers the core;
(d) cooling to a temperature sufficient to harden the molten first and second thermoplastic matrixes and thus form an abrasive filament having a core comprising the first thermoplastic matrix and first plastic abrasive particles, and a sheath comprising the second thermoplastic matrix and second plastic abrasive particles, wherein the sheath is substantially present over the core.

The second, third, and fourth variations just described can preferably be performed in accordance with U.S. Patent No. 5,427,595 (Pihl et al.). The methods and apparatuses for coextruding core/sheath filaments as taught by Pihl et al. can advantageously be modified as is within the knowledge of those skilled in the art to extrude monofilament embodiments within the scope of the present invention.

A fourth variation of this method comprises the steps of:
(a) rendering a thermoplastic matrix molten and combining plastic abrasive particles therewith;
(b) coating at least a portion of a preformed core with a coating comprising the molten thermoplastic matrix and plastic abrasive particles; and
(c) cooling the coating to a temperature sufficient to harden the molten thermoplastic matrix and thus form a hardened composition comprising a thermoplastic matrix having plastic abrasive particles interspersed throughout.

The just described method of forming composite filaments can preferably be performed in accordance with U.S. Patent No. 5,460,885 (Barber et al.).

Such composite filaments can be made by any of a variety of processes taught by Barber et al., including passing one or more preformed cores through a die in which molten, plastic particle filled thermoplastic matrix is coated onto the preformed cores as they move through the die, spray coating plastic particle filled, molten thermoplastic matrix onto a preformed core, or by passing a preformed core through a bath of molten thermoplastic matrix, followed by applying abrasive particles to the molten thermoplastic matrix coating. (Alternatively, the plastic abrasive particles could be in the bath of molten thermoplastic matrix.) Plastic abrasive particles may be applied to a thermoplastic matrix coated core by projecting the plastic abrasive particles toward the thermoplastic matrix coated preformed core by force, such as electrostatic force. However, the preferred method is the first mentioned one, wherein one or more preformed cores are passed through a die which at least partially coats the preformed cores with molten, plastic particle filled thermoplastic matrix, and the molten thermoplastic matrix cooled to form the hardened composition.

A fifth variation of this method comprises the steps of:
(a) rendering a thermoplastic matrix molten and combining plastic abrasive particles therewith;
(b) extruding the thermoplastic matrix and plastic abrasive particles, such that the thermoplastic matrix and the plastic abrasive particles form a sheet-like structure;
(c) cooling the structure to a temperature sufficient to harden the molten thermoplastic matrix and thus form a sheet;
(d) converting the sheet to form filament-like structures.

The converting of the sheet to filament-like structures can be done, for example, by die cutting, water jet cutting, fibrulating, or rotary cutting.

During the manufacture of the filament, the process and material selection should be designed for the following the conditions. The plastic abrasive particles should not substantially melt or degrade during the extrusion process. Thus, the thermoplastic matrix will typically have a melting point and/or softening point less than the plastic abrasive particles. This will allow the thermoplastic matrix to be rendered molten in the extrusion process, however the thermoplastic abrasive particles will not melt or become molten. Thus, after processing, the plastic abrasive particles will remain as discrete particles within the thermoplastic matrix. The present inventors have surprisingly found the unexpected result that the abrasive filament of the invention can be formed considering that there are two different organic material forming the filament. The organic material forming the thermoplastic matrix melts, while the organic material forming the plastic abrasive particle remains substantially unmelted. Also during processing, the melting and/or extrusion temperature should be such as to not excessively melt and/or degrade the plastic abrasive particles. The surface of the plastic abrasive particles should be relatively "dry", such that during processing gas (i.e., water vapor) is not given off. If gas or volatiles are given off during processing, this may result in undesirable voids or defects in the abrasive filament.

The extruder used can be a single barrel or a twin screw extruder. In addition, a CTM (cavity transfer mixer) can be used. These extruders are known in the art of thermoplastic extrusion. Temperatures, material feed rates, hoppers, and the like are also know.

The plastic abrasive particles can be mixed with the thermoplastic while the thermoplastic is either in the molten or solid state. A single stream of polymer/plastic can be used to produce the filaments of the present invention. In an alternate method, two individual feed streams can be used.

Plastic abrasive particles may be added to the molten thermoplastic matrix through a feed port in the extruder into the molten thermoplastic matrix mass, preferably at point early enough to afford adequate dispersal of plastic abrasive particles throughout the molten thermoplastic matrix. Alternatively, plastic abrasive particles may be distributed in the molten thermoplastic matrix coating via a second step (i.e. after the preformed core has been coated with molten thermoplastic matrix), such as by electrostatic coating.

The filaments of the present invention comprising thermoplastic and plastic abrasive particles can be extruded into cross-sectional shapes such as circles, ovals, and ellipses, polygons such as, for example, squares, rectangles, hexagons, and trapezoids, stars, and any other shape.

A cold water quench is preferably located immediately downstream of the die through which the molten extruded or coextruded filament or the thermoplastic matrix coated preformed core passes to achieve rapid cooling of the molten thermoplastic matrix to form a hardened composition comprising thermoplastic matrix and plastic particle particles. A process wherein multiple preformed cores are coated simultaneously or multiple filaments are extruded or coextruded may be preferable from the standpoint of mass producing plastic particle filaments. This may be accomplished using a manifold arrangement. In this case, more than one wind up roll may be required.

The plastic abrasive filament may then be cut to individual plastic particle filaments having the desired length. Although it is within the scope of this invention to orient the filaments to increase their tensile strength prior to use, it is not necessary to do so.

After the molten, plastic particle filament has hardened, the filaments may have a coating (e.g. a plastic coating) applied thereover. It is also within the scope of this invention to have the plastic abrasive particles protrude out of the filament.

The operation of the present invention will be further described with regard to the following detailed examples. These examples are offered to further illustrate the various specific and preferred embodiments and techniques. It should be understood, however, that many variations and modifications may be made while remaining within the scope of the present invention. In all examples, all parts and percentages are by weight unless otherwise stated. The "grade" of plastic abrasive particles refers to that used by the Grinding Wheel Institute (ANSI ASC B74,18-1984).

### Examples 1-70

Examples 1-70 were constructed generally in accordance with the embodiments described above with respect to Figures 1-3.

The injection molding machine used was a 75 ton Van Dorn single shot extruder with a toggle clamping system, a 54 gram (3 ounce) barrel and a general purpose screw. Molding parameters varied for each example due to formulation changes, mold design, mold condition, screw condition, and barrel condition. Typical molding parameters included: nozzle temperature 232°C (450°F), temperature at the front of the barrel (proximate the nozzle) 226°C (440°F), temperature at the rear of the barrel (proximate the hopper) 221°C (430°F), screw rotation 450 RPM, 2760 - 3450 kPa (400 - 500 psi) injection pressure, 5.1 mm (0.200 in) cushion, and a 7.37 cm (2.90 in) shot distance or length. A complete cycle time on average was about 36 seconds per abrasive brush.

The formulations used for the examples are reported in Table 1. Listed are the polymer components used, and the type and amount of abrasive particles. Prior to molding, each of the compounds was dried at 65°C (150°F) for 4 hours in a Bryant air dryer. The base 12 of the abrasive brushes 10 had a diameter of 5 cm (2 in), and a thickness of 2.54 mm (0.1 in.). The abrasive brush 10, had 254 integrally molded bristles 18. Each bristle 18 was 1.27 mm (0.50 in) long and tapered from 2.54 mm (0.10 in) diameter at the root to 1.27 mm (0.05 in) diameter at 80% of the length from root 20 to tip 22, and had a diameter of 1.27 mm (0.05 in) for the remainder of the length to tip 22. In some abrasive brushes, the fillet radius at the transition from the bristle to the base was approximately 0.25 mm (0.01 in) reported as fillet A in Table 2. Other abrasive brushes had a fillet radius of approximately 0.64 mm (0.025 in) reported as fillet B in Tables 3. Each abrasive brush 10 included an integrally molded threaded stud as the attachment means 30 according to U.S. Patent No. 3,562,968 (Johnson et al.).

The following components were used in preparing the examples described below:

| MOLDABLE POLYMER | |
|---|---|
| Hytrel™ | polyester-based TPE, available from E.I. Du Pont de Nemours and Company, Inc., Wilmington, Delaware. |
| | |
| Lubricomp™YL-4030 | polyester based TPE, including 15% PTFE lubricant; |
| Lubricomp™YF-1004 | polyester based TPE, including 20% glass fiber reinforcement; |
| Lubricomp™YC-1004 | polyester based TPE, including 20% carbon fiber reinforcement; all available from LNP Engineering Plastics, of Exton, PA. |
| | |
| Lomad™ Resin B0100 | polyester based TPE available from General Electric Co., of Pittsfield, MA. |
| | |
| Estane™ | polyurethane-base TPE available from B.F. Goodrich, Cleveland, Ohio. |
| | |
| Pebax™ 5533 SA 00 | nylon-based TPE, available from Atochem Inc., Glen Rock, New Jersey. |
| | |
| Duraflex™ 0110 | polybutylene TP available from Shell Chemical Co. of Houston, TX. |
| | |
| Profax™KS075P | polypropylene-based TP; |
| Profax™KS084P | polypropylene-based TP, both available from Himont USA Inc. of Wilmington, DE. |
| | |
| Grilon™ CR9 | Nylon 6,12 TP, available from EMS-American Grilon, Inc., of Sumter, SC. |

| LUBRICANTS | |
|---|---|
| BY27-005 | polyamide-based polymer melt additive; |
| BY27-010 (or MB50-010) | polyester elastomer-based polymer melt additive; both available from Dow Corning Company, Midland, Michigan. |

| COUPLING AGENTS | |
|---|---|
| silane | silane coupling agent, typically amine functional such as gamma-aminopropyltriethoxysilane, available as A-1100, or -1102 from Union Carbide Corporation, New York, NY. |
| Z-6030 | methacrylate functional silane coupling agent; |
| Z-6075 | vinyl functional silane coupling agent; both available from Dow Corning Corporation, Midland, Michigan. |

| ABRASIVE PARTICLES | |
|---|---|
| SiC | silicon carbide |
| | |
| Al₂O₃ | fused aluminum oxide, pretreated by Exolon ESK Company, Tonawanda, NY, or Washington Mills Electro Minerals Corp., North Grafton, MA. |
| | |
| Al₂O₃(h) | heat treated fused aluminum oxide |
| | |
| CA01 | alpha alumina-based ceramic comprising alpha alumina and a rare earth oxide, commercially available under the designation Cubitron™ 321 from Minnesota Mining and Manufacturing Company, St. Paul, MN. |
| | |
| CA02 | mixture of 15% CA01 and 85% scalped fused alumina |
| CA03 | mixture of 15% CA01 and fused alumina |
| CA04 | alpha alumina-based ceramic comprising 94.3% alumina, 4.5% aluminum oxide, and 1.2% iron oxide. |
| | |
| MC-3 | 30/40 mesh size untreated plastic blasting media available from Maxi-Blast Company of South Bend, Indiana. |

All compositions are reported throughout as weight ratios or percent by weight as the case may be, unless otherwise indicated. The percent composition for the components of the moldable polymer is reported based on 100% for the combination of the components of the moldable polymer exclusive of the abrasive particles. The abrasive content is reported as the percent composition of the abrasive particles based on 100% for the combination of the components of the moldable polymer with the abrasive particles.

### Examples 1-41

The composition of Examples 1-41 is set forth in Table 1

**TABLE 1**

| Ex. | Moldable Polymer | | Abrasive Particles | | |
|---|---|---|---|---|---|
| | TP and/or TPE | Lubricant | Particle | Coupling Agent | Abrasive Content |
| 1 | 90% CR9 | 10% BY27-005 | SiC - 80 grit | -- | 30% |
| 2 | 90% Hytrel 7246 | 10% BY27-010 | SiC - 80 grit | -- | 40% |
| 3 | 90% Hytrel 6356 | 10% BY27-010 | SiC - 80 grit | -- | 40% |
| 4 | 50% Hytrel 7246 | 50% YL-4030 | SiC - 80 grit | -- | 30% |
| 5 | 50% Hytrel 7246 | 50% YL-4030 | CA04 - 80 grit | -- | 30% |
| 6 | 84% Hytrel 6356 | 16% BY27-010 | Al₂O₃ - P60 grit | -- | 30% |
| 7¹ | 84% Hytrel 6356 | 16% BY27-010 | Al₂O₃ - P60 grit | -- | 30% |
| 8 | 84% YF-1004 | 16% BY27-010 | Al₂O₃ - P60 grit | -- | 30% |
| 9¹ | 84% YF-1004 | 16%BY27-010 | Al₂O₃ - P60 grit | -- | 30% |
| 10 | 84% Hytrel 6356 | 16% BY27-010 | Al₂O₃ - P120 grit | -- | 30% |
| 11 | 84% YF-1004 | 16% BY27-010 | Al₂O₃ - P120 grit | -- | 30% |
| 12 | 84% YF-1004 | 16% BY27-010 | CA01 - 80 grit | -- | 30% |
| 13² | 84% YF-1004 | 16% BY27-010 | CA01 - 80 grit | -- | 30% |
| 14 | 84% YF-1004 | 16% BY27-010 | CA01 - 120 grit | -- | 30% |
| 15 | 84% Hytrel 6356 | 16% BY27-010 | CA02 - 60 grit | -- | 30% |
| 16¹ | 84% Hytrel 6356 | 16% BY27-010 | CA02 - 60 grit | -- | 30% |
| 17 | 90% Hytrel 5526 | 10% BY27-010 | Al₂O₃ - 80 grit | -- | 25% |
| 18 | 90% Hytrel 5526 | 10% BY27-010 | Al₂O₃ - 80 grit | -- | 30% |
| 19 | 90% Hytrel 5526 | 10% BY27-010 | Al₂O₃ - 80 grit | silane | 25% |
| 20 | 90% Hytrel 5526 | 10% BY27-010 | Al₂O₃ - 80 grit | silane | 30% |
| 21 | 94% YC-1004 | 10% BY27-010 | Al₂O₃ - 80 grit | silane | 30% |
| 22 | 100% KS075P | -- | Al₂O₃ - 80 grit | silane | 35% |
| 23 | 100% KS084P | -- | Al₂O₃ - 80 grit | silane | 35% |
| 24 | 100% KS084P | -- | Al₂O₃ - 80 grit | silane | 35% |
| 25 | 51% Hytrel 5526 23.5% YC-1004 | 25.5% YL-4030 (3.8% PTFE) | Al₂O₃ - 80 grit | silane | 30% |
| 26 | 78% Hytrel 5526 10% YC-1004 | 12% BY27-010 | Al₂O₃ - 80 grit | silane | 30% |
| 27 | 90% Hytrel 5526 | 10% BY27-010 | Al₂O₃ - 80 grit | Z-6030 | 30% |
| 28 | 90% Hytrel 5526 | 10% BY27-010 | Al₂O₃ - 80 grit | Z-6075 | 30% |
| 29 | 90% Hytrel 5526 | 10% BY27-010 | Al₂O₃ - 60 grit | silane | 30% |
| 30¹ | 90% Hytrel 5526 | 10% BY27-010 | Al₂O₃ - 60 grit | silane | 30% |
| 31 | 90% Hytrel 5556 | 10% BY27-010 | Al₂O₃ - 60 grit | silane | 30% |
| 32¹ | 90% Hytrel 5556 | 10% BY27-010 | Al₂O₃ - 60 grit | silane | 30% |
| 33 | 90% Pebax | 10% BY27-010 | Al₂O₃ - 60 grit | silane | 30% |
| 34 | 90% Duraflex | 10% BY27-010 | Al₂O₃ - 60 grit | silane | 30% |
| 35 | 90% B0100 | 10% BY27-010 | Al₂O₃ - 60 grit | silane | 30% |
| 36 | 90% Estane 58092 | 10% BY27-010 | Al₂O₃ - 60 grit | silane | 30% |
| 37 | 90% Estane 58091 | 10% BY27-010 | Al₂O₃ - 60 grit | silane | 30% |
| 38 | 90% Hytrel 5526 | 10% BY27-010 | Al₂O₃ - 50 grit | silane | 30% |
| 39 | 90% Hytrel 5526 | 10% BY27-010 | SiC - 60 grit | -- | 30% |
| 40 | 90% Hytrel 5526 | 10% BY27-010 | CA02 - 60 grit | -- | 30% |
| 41 | 90% Hytrel 5526 | 10% BY27-010 | MC3 - 30/40 mesh | -- | 30% |

| | | | | | |
|---|---|---|---|---|---|
| ¹ molded polymer included orange pigment | | | | | |
| ² molded polymer included yellow pigment | | | | | |

### Performance Testing

Individual abrasive brushes 10 were tested on an apparatus that applied a load of 1.8 kg (4 lb.) for 20 seconds, then lifted for 11 seconds. This was repeated for 30 cycles for a total test time of 10 minutes on the workpiece. The workpiece was a flat plate of 5052 aluminum, 38.1 x 38.1 cm x 0.32 cm (15 x 15 x 1/8 inch) with a 0.64 cm (1/4 inch) central hole to mount it on the test apparatus. The plate was rotated at about 1 revolution every 3 minutes. The abrasive brushes were mounted on an Ingersoll-Rand cyclone series right angle grinder, model TA 180 RG4 rated at 18,000 rpm and 0.70 hp. The abrasive brush was run at 18,000 RPM free spinning (actual RPM under load was somewhat less). The abrasive brush was held at a 7° angle to the workpiece. The weight loss of the plate is recorded as cut. The weight loss and length reduction of the bristles of the abrasive brush are recorded as wear. Finish, Ra, was recorded after performance testing, and may not be as good as optimally attainable for each particular example, because the performance testing results in multiple passes being made over the same area of the workpiece. The results reported are the average of two brushes of the same composition, unless otherwise noted. Some compositions were tested both with fillet A and fillet B, some were not tested using this method.

**TABLE 2**

| (fillet A) | | | | | |
|---|---|---|---|---|---|
| Example | Cut, g | Wear, g | Wear, mm (in) | Broken Bristles | Ra Finish (micro inch) |
| 2 | 2.9 | 0.6 | 1.83 (0.072) | 0 | 29 |
| 4 | 3.5 | 0.7 | 0.99 (0.039) | 7 | 36 |
| 6 | 12.8 | 0.9 | 1.52 (0.060) | 9 | 42 |
| 8 | 10.4 | 1.8 | 1.78 (0.070) | 27 | 41 |
| 10 | 4.4 | 0.7 | 0.89 (0.035) | 8 | 27 |
| 15 | 13.9 | 1.1 | 1.47 (0.058) | 14 | 46 |

**TABLE 3**

| (fillet B) | | | | | |
|---|---|---|---|---|---|
| Example | Cut, g | Wear, g | Wear, mm (in) | Broken Bristles | Ra Finish (micro inch) |
| 6 | 13.8 | 0.9 | 1.37 (0.054) | 8 | 40 |
| 15 | 15.3 | 1.1 | 1.85 (0.073) | 8 | 51 |
| 18 | 9.8 | 0.8 | 1.27 (0.050) | 0 | 34 |
| 19 | 12.0 | 0.9 | 1.63 (0.064) | 0 | 36 |
| 20 | 12.2 | 0.9 | 1.75 (0.069) | 0 | 33 |
| 20 | 12.5 | 0.9 | 1.63 (0.064) | 0 | 40 |
| 23¹ | | | | | |
| 25 | 6.0 | 0.5 | 0.89 (0.035) | 5 | 35 |
| 26 | 12.1 | 0.9 | 1.63 (0.064) | 1 | 36 |
| 27 | 10.9 | 0.9 | 1.60 (0.063) | 0 | 39 |
| 28 | 10.9 | 0.8 | 1.55 (0.061) | 0 | 34 |
| 29 | 16.4 | 1.2 | 2.01 (0.079) | 3 | 46 |
| 30 | 17.1 | 1.7 | 2.11 (0.083) | 1 | 42 |
| 31 | 15.2 | 1.1 | 1.75 (0.069) | 0 | 42 |
| 32 | 15.1 | 1.1 | 1.80 (0.071) | 0 | 42 |
| 33 | 3.0 | 0.1 | 0.13 (0.005) | 0 | 45 |
| 34² | | | | | |
| 35³ | | | | | |
| 36⁴ | | | | | |
| 37⁵ | | | | | |
| 38 | 21.4 | 1.5 | 2.54 (0.100) | 1 | 50 |
| 39 | 13.0 | 1.2 | 2.01 (0.079) | 2 | 37 |
| 40 | 20.3 | 1.8 | 2.87 (0.113) | 9 | 49 |
| 41⁶ | 0 | 0 | 0.00 (0.000) | 0 | N.A. |

| | | | | | |
|---|---|---|---|---|---|
| ¹bristles melted, only one brush tested | | | | | |
| ²failed at 1 & 10 cycles - melted bristles | | | | | |
| ³attaching means failed at 10 & 18 cycles | | | | | |
| ⁴attaching means failed at 3 & 4 cycles | | | | | |
| ⁵failed at 10 & 30 cycles - melted bristles | | | | | |
| ⁶plastic abrasive particles | | | | | |

### Examples 42-70

### Performance Testing

Performance testing was the same as for examples 1-41, except for the following. All examples had a fillet radius of approximately 0.025 inches. Results for the aluminum test pieces are the average of two tests, results for cold rolled steel (CRS) are a single test, results for stainless steel (SS) are a single test. Microfinish (reported as Ra and Rz in micro-inches) is the result after hand testing a particular brush example on a different test piece than that used for the performance testing, with the finish prior to refining the surface being (in micro-inches):

| | | |
|---|---|---|
| aluminum | Ra: 7 | Rz: 40 |
| CRS | Ra: 31 | Rz: 151 |
| Stainless Steel | Ra: 11 | Rz: 72 |

Composition of the example abrasive brushes is reported in Table 4, test results on aluminum in Table 5, tests results on cold rolled steel in Table 6 (not all examples tested); test results on stainless steel in Table 7 (not all examples tested). No broken bristles were observed in Examples 42-70.

**TABLE 4**

| | Moldable Polymer | | Abrasive Particles | | |
|---|---|---|---|---|---|
| Ex. | TP and/or TPE | Lubricant | Particle | Coupling Agent | Abrasive Content |
| 42 | 90% Hytrel 5526 | 10% BY27-010 | Al₂O₃ - 80 grit | silane | 30% |
| 43 | 90% Hytrel 5526 | 10% BY27-010 | Al₂O₃ - 50 grit | silane | 30% |
| 44 | 80% Hytrel 5526 | 20% BY27-010 | Al₂O₃ - 600 grit | -- | 30% |
| 45 | 80% Hytrel 5526 | 20% BY27-010 | Al₂O₃ - 400 grit | -- | 30% |
| 46 | 80% Hytrel 5526 | 20% BY27-010 | Al₂O₃ - 320 grit | -- | 30% |
| 47 | 80% Hytrel 5526 | 20% BY27-010 | Al₂O₃ - 220 grit | -- | 30% |
| 48 | 80% Hytrel 5526 | 20% BY27-010 | Al₂O₃ - 220 grit | silane | 30% |
| 49 | 80% Hytrel 5526 | 20% BY27-010 | SiC - 220 grit | -- | 26% |
| 50 | 80% Hytrel 5526 | 20% BY27-010 | Al₂O₃ - 180 grit | -- | 30% |
| 51 | 80% Hytrel 5526 | 20% BY27-010 | Al₂O₃ - 150 grit | silane | 30% |
| 52 | 80% Hytrel 5526 | 20% BY27-010 | Al₂O₃ - 120 grit | silane | 30% |
| 53 | 80% Hytrel 5526 | 20% BY27-010 | Al₂O₃ - 120 grit | -- | 30% |
| 54 | 80% Hytrel 5526 | 20% BY27-010 | SiC - 120 grit | -- | 26% |
| 55 | 80% Hytrel 5526 | 20% BY27-010 | Al₂O₃ - 100 grit | silane | 30% |
| 56 | 80% Hytrel 5526 | 20%BY27-010 | Al₂O₃ (h) 80 grit | -- | 30% |
| 57 | 80% Hytrel 5526 | 20% BY27-010 | Al₂O₃ - 80 grit | -- | 30% |
| 58 | 80% Hytrel 5526 | 20% BY27-010 | Al₂O₃ - 80 grit | silane | 30% |
| 59 | 80% Hytrel 5526 | 20% BY27-010 | CA02 - 80 grit | -- | 30% |
| 60 | 80% Hytrel 5526 | 20% BY27-010 | CA03 - P120 grit | -- | 30% |
| 61 | 80% Hytrel 5526 | 20% BY27-010 | CA03 - P220 grit | -- | 30% |
| 62 | 80% Hytrel 5526 | 20% BY27-010 | Al₂O₃ - 60 grit | silane | 30% |
| 63 | 80% Hytrel 5526 | 20% BY27-010 | Al₂O₃ - 50 grit | silane | 30% |
| 64 | 80% Hytrel 5526 | 20% BY27-010 | Al₂O₃ - 50 grit | -- | 30% |
| 65 | 80% Hytrel 5526 | 20% BY27-010 | SiC - 50 grit | -- | 26% |
| 66 | 80% Hytrel 5526 | 20% BY27-010 | CA02 - 50 grit | silane | 30% |
| 67 | 80% Hytrel 5556 | 20% BY27-010 | Al₂O₃ - 120 grit | silane | 30% |
| 68 | 80% Hytrel 5556 | 20% BY27-010 | Al₂O₃ - 50 grit | silane | 30% |
| 69 | 100% Pebax 5533 | -- | Al₂O₃ - 50 grit | silane | 30% |
| 70 | 90% Pebax 5533 | 10% BY27-010 | Al₂O₃ - 60 grit | silane | 40% |

**TABLE 5**

| **(Results on Aluminum)** | | | | | |
|---|---|---|---|---|---|
| Example | Cut, g | Wear, g | Wear, mm (in) | Ra | Rz |
| 42 | 11.8 | 0.7 | 1.52 (0.060) | 39.0 | 254 |
| 43 | 16.7 | 1.2 | 2.13 (0.084) | 56.5 | 336 |
| 44 | 0.2 | 0.1 | 0.33 (0.013) | 6.7 | 45 |
| 45 | 0.2 | 0.2 | 0.33 (0.013) | 9.1 | 59 |
| 46 | 0.4 | 0.1 | 0.28 (0.011) | 7.1 | 48 |
| 47 | 2.0 | 0.2 | 0.64 (0.025) | 8.8 | 58 |
| 48 | 2.0 | 0.2 | 0.61 (0.024) | 11.5 | 73 |
| 49 | 2.1 | 0.3 | 0.71 (0.028) | 10.6 | 69 |
| 50 | 2.2 | 0.2 | 0.61 (0.024) | 12.9 | 82 |
| 51 | 2.6 | 0.4 | 0.66 (0.026) | 16.5 | 103 |
| 52 | 4.2 | 0.4 | 0.86 (0.034) | 19.2 | 116 |
| 53 | 3.9 | 0.3 | 0.76 (0.030) | 17.3 | 108 |
| 54 | 2.7 | 0.3 | 0.86 (0.034) | 17.5 | 114 |
| 55 | 6.7 | 0.4 | 0.97 (0.038) | 23.5 | 141 |
| 56 | 12.2 | 0.7 | 1.37 (0.054) | 33.0 | 197 |
| 57 | 10.3 | 0.7 | 1.12 (0.044) | 26.9 | 157 |
| 58 | 11.3 | 0.7 | 1.35 (0.053) | 31.0 | 178 |
| 59 | 12.5 | 0.8 | 1.45 (0.057) | 40.5 | 224 |
| 60 | 5.9 | 0.4 | 0.94 (0.037) | 23.0 | 138 |
| 61 | 2.1 | 0.2 | 0.76 (0.030) | 11.6 | 74 |
| 62 | 13.7 | 0.8 | 1.62 (0.060) | 40.0 | 227 |
| 63 | 17.4 | 1.0 | 1.70 (0.067) | 39.5 | 223 |
| 64 | 16.5 | 0.9 | 1.75 (0.069) | 52.0 | 298 |
| 65 | 10.0 | 0.9 | 1.65 (0.065) | 34.5 | 192 |
| 66 | 19.6 | 1.1 | 2.03 (0.080) | 46.0 | 286 |
| 67 | 4.0 | 0.3 | 0.84 (0.033) | 18.1 | 120 |
| 68 | 17.6 | 1.0 | 1.85 (0.073) | 55.0 | 344 |
| 69 | 2.8 | 5.2 | 8.99 (0.354) | 54.0 | 320 |
| 70 | 2.8 | 0.1 | 0.18 (0.007) | 39.5 | 242 |

**TABLE 6**

| **(Results on Cold Rolled Steel)** | | | | | |
|---|---|---|---|---|---|
| Example | Cut, g | Wear, g | Wear, mm (in) | Ra | Rz |
| 47 | 0.3 | 0.1 | 0.025 (0.001) | 22 | 112 |
| 48 | 0.4 | 0.0 | 0.076 (0.003) | 23 | 113 |
| 49 | 0.5 | 0.0 | 0.10 (0.004) | 20 | 109 |
| 52 | 0.8 | 0.1 | 0.051 (0.002) | 16 | 84 |
| 53 | 0.6 | 0.1 | 0.076 (0.003) | 21 | 116 |
| 54 | 0.9 | 0.1 | 0.15 (0.006) | 18 | 97 |
| 56 | 1.6 | 0.0 | 0.13 (0.005) | 25 | 152 |
| 57 | 1.1 | 0.0 | 0.13 (0.005) | 24 | 150 |
| 58 | 1.3 | 0.0 | 0.076 (0.003) | 23 | 142 |
| 59 | 1.9 | 0.0 | 0.051 (0.002) | 20 | 119 |
| 60 | 1.0 | 0.0 | 0.10 (0.004) | 18 | 106 |
| 61 | 0.5 | 0.1 | 0.076 (0.003) | 17 | 87 |
| 63 | 4.2 | 0.0 | 0.13 (0.005) | 22 | 131 |
| 64 | 3.2 | 0.1 | 0.18 (0.007) | 29 | 176 |
| 65 | 2.5 | 0.1 | 0.23 (0.009) | 15 | 95 |
| 66 | 4.7 | 0.1 | 0.15 (0.006) | 30 | 177 |

**TABLE 7**

| **(Results on Stainless Steel)** | | | | | | |
|---|---|---|---|---|---|---|
| Example | Bristle Melt¹ | Cut, g | Wear, g | Wear, mm (in) | Ra (µ in) | Rz (µ in) |
| 47 | 3 | 0.5 | 1.0 | 0.025 (0.112) | 5.4 | 39 |
| 48 | 1 | 0.4 | 0.0 | 0.076 (0.002) | 6.3 | 48 |
| 49 | 2 | 0.3 | 0.0 | 0.10 (0.019) | 4.8 | 40 |
| 52 | 2 | 0.8 | 0.1 | 0.051 (0.031) | 9.7 | 74 |
| 53 | 1 | 0.6 | 0.0 | 0.076 (0.010) | 8.5 | 60 |
| 54 | 2 | 0.8 | 0.1 | 0.15 (0.024) | 6.3 | 46 |
| 56 | 1 | 2.0 | 0.1 | 0.13 (0.003) | 14.5 | 103 |
| 57 | 3 | 2.2 | 0.5 | 0.13 (0.073) | 15.5 | 112 |
| 58 | 2 | 2.1 | 0.1 | 0.076 (0.016) | 10.7 | 80 |
| 59 | 1 | 2.2 | 0.0 | 0.051 (0.005) | 17.0 | 119 |
| 60 | 3 | 1.4 | 0.4 | 0.10 (0.065) | 10.9 | 78 |
| 61 | 3 | 0.4 | 0.5 | 0.076 (0.056) | 6.9 | 50 |
| 63² | 3 | 0.5 | 1.6 | 0.13 (0.155) | 12.1 | 83 |
| 64³ | 3 | 1.1 | 1.6 | 0.18 (0.151) | 18.6 | 126 |
| 65 | 1 | 1.5 | 0.1 | 0.23 (0.007) | 18.9 | 138 |
| 66² | 3 | 0.4 | 1.4 | 0.15 (0.142) | 20.6 | 142 |

| | | | | | | |
|---|---|---|---|---|---|---|
| ¹ Bristle melt: 1 = none or negligible; 2 = minor; 3 = unacceptable (brush inoperative) | | | | | | |
| ² Test stopped at 2 cycles | | | | | | |
| ³ Test stopped at 6 cycles | | | | | | |

### Example 71

A molded abrasive brush 110 to be utilized on a rotary floor machine was prepared generally according to the embodiment of Figures 8-9 by injection molding a Hytrel™ 5526 polyester based thermoplastic elastomer (available from Du Pont) that was compounded to contain 30% by weight 120 grade silicon carbide abrasive. The material was pelletized after compounding. The pelletized compound was injection molded on a 75 ton Van Dorn press utilizing a mud set plastic injection prototype mold as described above with respect to examples 1-70. Mold temperature was 60°C (140°F) and melt temperature was approximately 237°C (460°F). Cycle time was 30 seconds. Part weight was 32.5 grams.

The base 112 was a generally wedge-shaped polygon, 10.5 cm (4.125 in) long by 3.8 cm (1.50 in) wide at one end and 2.2 cm (0.875 in) wide at the opposite end. Extending from one major surface were 440 bristles 118 each 1.9 cm (0.75 in ) long, 2.3 mm (0.090 in) diameter at the root and 1.0 mm (0.040 in) diameter at tip 122. The 9.5 mm (0.375 in) long portion of the bristle 118 adjacent tip 122 was cylindrical.

### Examples 72-74

Examples 72-74 include plastic abrasive particles described above.

### Example 72

Example 72 was an extruded plastic abrasive filament having a monofilament configuration generally in accordance with the embodiment described with reference to Figure 32. The extruder was a Werner/Pfleiderer ZSK30 co-rotating twin screw extruder with 7 heated barrel zones. The extruder was fitted with two 30 mm diameter co-rotating screws having an L/D ratio of 30:1. The die on the extruder was as taught by U.S. Patent No. 5,427,595, operated as a monofilament extruder rather than as a coextruder.

A composition was prepared containing a combination of "Hytrel 6356", a polyester based thermoplastic elastomer from E.I. Du Pont de Nemours and Company, Inc., and 20 wt-% "BY27-010", a polyester elastomer based polymer melt additive available from Dow Corning Company (also known as "MB50-010"). This composition was fed into the extruder at rate of 31.7 grams per minute. The extruder rotated at 350 rpm, and the pressure within the extruder was 200 psi. The thermoplastic matrix was first rendered molten by the extruder, after which polyester abrasive particles were added at a rate of approximately 8 grams per minutes through a feed port of the extruder barrel. The plastic abrasive particles were commercially available from U.S. Technology Corp. under the trade designation "Polyextra Plastic Blast Media", have a MOH's hardness of 3, 30/40 mesh size, and had been dried overnight at 121°C before using.

The temperatures in the various extruder zones were as follows: barrel zones 1 through 7: (C°) 246°, 254°, 257°, 251°, 251°, 246°, 227°; adapter zones 8 through 11: (C°) 227°, 221°, 227°, 227°; Die zone 12: (C°) 238°.

Two filaments were pulled at 12.2 meters/min (40 fpm), through a water quench tank placed about 25 mm from the face of the extrusion die, after which the filaments were wound up on a 76.2 cm (30 inch) diameter collecting drum. A bundle approximately 5 cm (2 in) in diameter was cut off the winder and wrapped to form a rigid, straight bundle. Sections were cut off the bundle to a length of 1.59 cm (5/8 in).

A silastic rubber mold having a 0.95 cm (3/8 in) diameter central hole for inserting a threaded attachment button (taught by U.S. Patent No. 3,562,968 (Johnson et al.) and known commercially as "Roloc") was used to form the backing. The mold reservoir was 5 cm (2 in) diameter by 0.635 cm (1/4 in) deep. After the attachment button was in place, a 9:1 weight ratio of "Adiprene LF600D" from Uniroyal and "Ethicure 300" from Ethyl Chemicals was mixed at room temperature and poured into the reservoir to a depth of about 0.47 cm (3/16 in). The mixture surrounded the flange of the button so when cured the button was held firmly in place. After the pouring was complete a plastic bristle guide plate was placed over the mold so that the mold and plate were concentric. The guide plate had holes through it to direct placement of the bristles and hold them vertical until curing was complete. Then, 384 extruded bristles were manually placed in the Adiprene/Ethicure mixture so that about 1.27 cm (1/2 in) of bristle extended from the base. The entire assembly was placed in an oven at 86°C for one hour for curing. Once cured, the backing and the guide plate were lifted off the bristles. The resulting brush was then ready for testing on a right angle power tool.

The brush was attached to a right angle, air driven power tool, a 20,000 rpm Ingersoll Rand model Cyclone CA200 rated at 0.35HP. The tool was fitted with a 5 cm (2 in) backup pad. The brush was used to remove black enamel paint from a cold rolled steel 0.8 mm (0.032 inch) thick panel from ACT Laboratories, Inc., of Hillsdale, MI. The brush was observed to remove paint without damaging or scratching the surface of the metal.

### Example 73

Example 73 was prepared as described in Example 72, except that 192 extruded bristles were manually placed in the Adiprene/Ethicure mixture so that about 1 cm (3/8 in) bristle extended from the base. Example 73 was tested as described with respect to Example 72, and was observed to remove paint from the workpiece without damaging or scratching the surface of the metal.

### Example 74

Example 74 was a unitary injection molded brush that was molded generally in accordance with the molded abrasive brush 10 described with respect to the embodiment illustrated in Figures 1-3. The extruder was a 75 ton Van Dorn single shot extruder with a toggle clamping system, a 54 gram (3 ounce) barrel and a general purpose screw.

A composition was prepared containing a combination of 90 wt-% "Hytrel" 5526, a polyester based thermoplastic elastomer from E.I. Du Pont de Nemours and Company, Inc. and 10 wt-% "BY27-010", and 30 wt-% based on 100% for the combination of the components of a plastic abrasive "MC-3", 30/40 mesh size untreated plastic blasting media available from Maxi-Blast Company of South Bend, IN. Prior to molding, each of the compounds were dried at 79°C (175°F) for 4 hours in a Bryant air dryer.

The base of the brushes had a diameter of 5 cm (2 in), and a thickness of 2.54 mm (0.1 in). The brush had 254 integrally molded bristles. Each bristle was 1.27 mm (0.50 in) long and tapered from 2.54 mm (0.10 in) diameter at the root to 1.27 mm (0.05 in) diameter at 80% of the length from root to the tip, and had a diameter of 1.27 mm (0.05 in) for the remainder of the length to tip. The fillet radius at the base of the bristles was approximately 0.64 mm (0.025 in). Each brush included an integrally molded threaded stud as the attachment means according to U.S. Patent No. 3,562,968 (Johnson et al.).

To determine if the abrasive brushes were suitable for use on aluminum workpieces, brushes were tested on an apparatus that applied a load of 1.8 kg (4 lb.) for 20 seconds, then lifted for 11 seconds. This was repeated for 30 cycles for a total test time of 10 minutes on the workpiece. The workpiece was a flat plate of 5052 aluminum, 38.1 x 38.1 cm x 0.32 cm (15 x 15 x 1/8 inch) with a 0.64 cm (1/4 inch) central hole to mount it on the test apparatus. The plate was rotated at about 1 revolution every 3 minutes. The abrasive brush was mounted on an Ingersoll-Rand cyclone series right angle grinder, model TA 180 RG4 rated at 18,000 rpm and 0.70 hp. The abrasive brush was run at 18,000 RPM free spinning (actual RPM under load was somewhat less). The abrasive brush was held at a 7° angle to the workpiece. The workpieces were weighed before and after the test, and brushes caused no material loss on the workpiece.

Brushes constructed in accordance with Example 74 were also used as follows. The brushes were used with hand held rotary tools to remove gaskets from aluminum automobile engine blocks, and were observed to successfully remove the gasket material without removing material from the engine block. Brushes were also used with hand held rotary tools to remove the outer coating of paint while leaving on the workpiece a primer coat or an e-coat on test panels from ACT Laboratories, Inc., of Hillsdale, Michigan, prepared as follows:

### Panel 1

material: cold rolled steel, 0.81 mm (0.032 inches) thick, unpolished
designation: B952 P60 DIW
primer: GPX05379
basecoat: E98KD405 black
clearcoat: E126CD005 stainguard 3

### Panel 2

material: cold rolled steel, 0.81 mm (0.032 inches) thick, unpolished
designation: C168 C20 DIW
e-coat: ED3150A
primer: 80-1146 (GPX5028)
basecoat: 872AB921 black
clearcoat: RK3840
paint spec.: 998-4065

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from the scope of the invention. For example, the abrasive brush according to the present invention may be provided with means for introducing fluid such as coolants, lubricants, and cleaning fluids to the workpiece during operation as is known in the art, such as by openings through the backing or bristles. Thus, the scope of the present invention should not be limited to the exact details and structures described herein, but rather by the structures described by the language of the claims, and the equivalents of those structures.

## Claims

1. An integrally-molded abrasive brush (10) for use with a rotary tool at a rotational speed of at least 1000 rpm, the brush comprising:
a base (12) having a first side (14) and a second side (16), wherein said base is generally planar;
a plurality of bristles (18) extending from said first side of said base, wherein said bristles have an aspect ratio of at least 2, and wherein said bristles are integrally-molded with said base; and
attachment means provided on said base (12) for attaching said abrasive brush to a tool;
wherein said molded abrasive brush comprises a thermoplastic elastomeric material (28) and wherein said bristles include abrasive particles (26) interspersed in said elastomeric material.

2. The molded abrasive brush (10) of claim 1, wherein said base (12) is flexible.

3. The molded abrasive brush (10 of claim 1 or claim 2, wherein said bristles (18) have an aspect ratio of at least 5.

4. The molded abrasive brush (10) of any one of the preceding claims, wherein said bristles (18) have an aspect ratio of at least 7.

5. The molded abrasive brush (10) of any one of the preceding claims, wherein said bristles (18) have an aspect ratio of at least 10.

6. The molded abrasive brush (10) of any one of the preceding claims, wherein said bristles (18) have an aspect ratio of at least 20.

7. The molded abrasive brush (10) of any one of claims 1-6, wherein said bristles (20) each comprise a root (18) adjacent said base (12) and a tip (22) opposite said base, and wherein said bristles are tapered so as to be wider at said root than at said tip.

8. The molded abrasive brush (10) of claim 7, wherein said bristles (18) are tapered at a first portion adjacent said root (20), and wherein said bristles have a constant thickness at a second portion adjacent said tip (22).

9. The molded abrasive brush (10) of claim 7, wherein said bristles (18) include a fillet radius (24) at the transition from said root (20) to said base (12).

10. The molded abrasive brush (10) of any one of the preceding claims, wherein said attachment means comprises a threaded stud (30) integrally molded with said base (12) and extending from said second side (16) of said base.

11. The molded abrasive brush (10) of any one of the preceding claims, wherein said thermoplastic elastomer (28) comprises a polyester based thermoplastic elastomer.

12. The molded abrasive brush (10) of any one of the preceding claims, wherein said thermoplastic elastomer (28) further comprises a lubricant.

13. The molded abrasive brush (10) of any one of the preceding claims, wherein said thermoplastic elastomer (28) comprises a plurality of abrasive particles (26) interspersed throughout said abrasive brush.

14. The molded abrasive brush (10) of any one of claims 1-13, wherein said abrasive particles (26) comprise inorganic abrasive particles.

15. The molded abrasive brush (10) of any one of claims 1-13, wherein said abrasive particles (26) comprise organic abrasive particles.

16. The molded abrasive brush (10) of any one of the preceding claims, wherein said base (12) includes a reinforcing means (40) for reinforcing said base.

17. The molded abrasive brush (10) of any one of claims 1-17, wherein said reinforcing means comprises a reinforcing substrate (40b) provided on said second side (16) of said base (12).

18. The molded abrasive brush (10) of any of claims 1-17, wherein said base (12) is circular.

19. The molded abrasive brush (10) of any one of claims 1-17, wherein said base (12) is polygonal.

## Patentansprüche

1. Integral geformte Schleifbürste (10) zur Verwendung mit einem rotierenden Werkzeug mit einer Drehzahl von mindestens 1000 U/min, wobei die Bürste folgendes umfaßt:
eine Basis (12) mit einer ersten Seite (14) und einer zweiten Seite (16), wobei die Basis allgemein planar ist;
mehrere sich von der ersten Seite der Basis erstreckende Borsten (18) mit einem Längenverhältnis von mindestens 2, wobei die Borsten mit der Basis integral geformt sind; und
ein an der Basis (12) vorgesehenes Befestigungsmittel (12) zur Befestigung der Schleifbürste an einem Werkzeug;
wobei die geformte Schleifbürste ein thermoplastisches elastomeres Material (28) umfaßt und wobei die Borsten Schleifteilchen (26) enthalten, mit denen das elastomere Material durchsetzt ist.

2. Geformte Schleifbürste (10) nach Anspruch 1, bei der die Basis (12) flexibel ist.

3. Geformte Schleifbürste (10) nach Anspruch 1 oder 2, bei der die Borsten (18) ein Längenverhältnis von mindestens 5 aufweisen.

4. Geformte Schleifbürste (10) nach einem der vorhergehenden Ansprüche, bei der die Borsten (18) ein Längenverhältnis von mindestens 7 aufweisen.

5. Geformte Schleifbürste (10) nach einem der vorhergehenden Ansprüche, bei der die Borsten (18) ein Längenverhältnis von mindestens 10 aufweisen.

6. Geformte Schleifbürste (10) nach einem der vorhergehenden Ansprüche, bei der die Borsten (18) ein Längenverhältnis von mindestens 20 aufweisen.

7. Geformte Schleifbürste (10) nach einem der Ansprüche 1 - 6, bei der die Borsten (20) jeweils eine Wurzel (18) neben der Basis (12) und eine Spitze (22) gegenüber der Basis umfassen und bei der die Borsten konisch so zulaufen, daß sie an der Wurzel breiter sind als an der Spitze.

8. Geformte Schleifbürste (10) nach Anspruch 7, bei der die Borsten (18) an einem ersten Teil neben der Wurzel (20) konisch zulaufen und bei der die Borsten an einem zweiten Teil neben der Spitze (22) eine gleichmäßige Dicke aufweisen.

9. Geformte Schleifbürste (10) nach Anspruch 7, bei der die Borsten (18) an der Übergangsstelle von der Wurzel (20) zur Basis (12) einen Übergangsradius (24) aufweisen.

10. Geformte Schleifbürste (10) nach einem der vorhergehenden Ansprüche, bei der das Befestigungsmittel einen integral mit der Basis (12) geformten Gewindezapfen (30) umfaßt, der sich von der zweiten Seite (16) der Basis erstreckt.

11. Geformte Schleifbürste (10) nach einem der vorhergehenden Ansprüche, bei der das thermoplastische Elastomer (28) ein thermoplastisches Elastomer auf Polyesterbasis umfaßt.

12. Geformte Schleifbürste (10) nach einem der vorhergehenden Ansprüche, bei der das thermoplastische Elastomer (28) weiterhin ein Schmiermittel umfaßt.

13. Geformte Schleifbürste (10) nach einem der vorhergehenden Ansprüche, bei der das thermoplastische Elastomer (28) mehrere Schleifteilchen (26) umfaßt, die die ganze Schleifbürste durchsetzen.

14. Geformte Schleifbürste (10) nach einem der Ansprüche 1 - 13, bei der die Schleifteilchen (26) anorganische Schleifteilchen umfassen.

15. Geformte Schleifbürste (10) nach einem der Ansprüche 1 - 13, bei der die Schleifteilchen (26) organische Schleifteilchen umfassen.

16. Geformte Schleifbürste (10) nach einem der vorhergehenden Ansprüche, bei der die Basis (12) zu ihrer Verstärkung ein Verstärkungsmittel (40) enthält.

17. Geformte Schleifbürste (10) nach einem der Ansprüche 1 - 17, bei der das Verstärkungsmittel eine auf der zweiten Seite (16) der Basis (12) vorgesehene Verstärkungsunterlage (40b) umfaßt.

18. Geformte Schleifbürste (10) nach einem der Ansprüche 1 - 17, bei der die Basis (12) kreisrund ist.

19. Geformte Schleifbürste (10) nach einem der Ansprüche 1 - 17, bei der die Basis (12) polygonal ist.

## Revendications

1. Brosse abrasive intégralement moulée (10) à utiliser avec un outil rotatif à une vitesse de rotation d'au moins 1000 tpm, comprenant:
une base (12) ayant une première face (14) et une seconde face (16), dans laquelle ladite base est généralement plane;
une pluralité de poils (18) s'étendant à partir de ladite première face de ladite base, dans laquelle lesdits poils ont un rapport d'élancement d'au moins 2, et dans laquelle lesdits poils sont intégralement moulés avec ladite base; et
des moyens de fixation prévus sur ladite base (12) servant à attacher ladite brosse abrasive à un outil;
dans laquelle ladite brosse abrasive moulée comprend une matière élastomère thermoplastique (28) et dans laquelle lesdits poils comprennent des particules abrasives (26) dispersées dans ladite matière élastomère.

2. Brosse abrasive moulée (10) conformément à la revendication 1, dans laquelle ladite base (12) est flexible.

3. Brosse abrasive moulée (10) conformément à la revendication 1 ou à la revendication 2, dans laquelle lesdits poils (18) ont un rapport d'élancement d'au moins 5.

4. Brosse abrasive moulée (10) conformément à l'une quelconque des revendications qui précèdent, dans laquelle lesdits poils (18) ont un rapport d'élancement d'au moins 7.

5. Brosse abrasive moulée (10) conformément à l'une quelconque des revendications qui précèdent, dans laquelle lesdits poils (18) ont un rapport d'élancement d'au moins 10.

6. Brosse abrasive moulée (10) conformément à l'une quelconque des revendications qui précèdent, dans laquelle lesdits poils (18) ont un rapport d'élancement d'au moins 20.

7. Brosse abrasive moulée (10) conformément à l'une quelconque des revendications 1 à 6, dans laquelle lesdits poils (18) comprennent chacun une racine (20) à proximité de ladite base (12) et une pointe (22) à l'opposé de ladite base, et dans laquelle lesdits poils sont effilés de manière à être plus larges à ladite racine qu'à ladite pointe.

8. Brosse abrasive moulée (10) conformément à la revendication 7, dans laquelle lesdits poils (18) sont effilés dans une première portion à proximité de ladite racine (20), et dans laquelle lesdits poils ont une épaisseur constante dans une seconde portion à proximité de ladite pointe (22).

9. Brosse abrasive moulée (10) conformément à la revendication 7, dans laquelle lesdits poils (18) comprennent un congé de raccordement (24) au passage de ladite racine (20) à ladite base (12).

10. Brosse abrasive moulée (10) conformément à l'une quelconque des revendications qui précèdent, dans laquelle lesdits moyens de fixation comprennent un goujon fileté (30) intégralement moulé avec ladite base (12) et s'étendant à partir de ladite seconde face (16) de ladite base.

11. Brosse abrasive moulée (10) conformément à l'une quelconque des revendications qui précèdent, dans laquelle ledit élastomère thermoplastique (28) comprend un élastomère thermoplastique à base de polyester.

12. Brosse abrasive moulée (10) conformément à l'une quelconque des revendications qui précèdent, dans laquelle ledit élastomère thermoplastique (28) comprend en outre un lubrifiant.

13. Brosse abrasive moulée (10) conformément à l'une quelconque des revendications qui précèdent, dans laquelle ledit élastomère thermoplastique (28) comprend une pluralité de particules abrasives (26) dispersées d'un bout à l'autre de ladite brosse abrasive.

14. Brosse abrasive moulée (10) conformément à l'une quelconque des revendications 1 à 13, dans laquelle lesdites particules abrasives (26) comprennent des particules abrasives inorganiques.

15. Brosse abrasive moulée (10) conformément à l'une quelconque des revendications 1 à 13, dans laquelle lesdites particules abrasives (26) comprennent des particules abrasives organiques.

16. Brosse abrasive moulée (10) conformément à l'une quelconque des revendications qui précèdent, dans laquelle ladite base (12) comprend des moyens de renforcement (40) servant à renforcer ladite base.

17. Brosse abrasive moulée (10) conformément à l'une quelconque des revendications 1 à 16, dans laquelle lesdits moyens de renforcement comprennent un substrat de renforcement (40b) prévu sur ladite seconde face (16) de ladite base (12).

18. Brosse abrasive moulée (10) conformément à l'une quelconque des revendications 1 à 17, dans laquelle ladite base (12) est circulaire.

19. Brosse abrasive moulée (10) conformément à l'une quelconque des revendications 1 à 17, dans laquelle ladite base (12) est polygonale.
